# FASCICULE DE BREVET EUROPEEN

(11) **EP 2 976 924 B1**
(45) Date de publication et mention de la délivrance du brevet: **03.05.2017**
(21) Numéro de dépôt: 14716890.0
(22) Date de dépôt: 19.03.2014
(51) Int. Cl.: H04W 72/04, H04J 11/00, H04W 72/08

(54) **PROCEDE DE SIGNALISATION DANS UN RESEAU DE TELECOMMUNICATIONS CELLULAIRE**
VERFAHREN ZUR SIGNALISIERUNG IN EINEM ZELLULAREN TELEKOMMUNIKATIONSNETZWERK
METHOD FOR SIGNALLING IN A CELLULAR TELECOMMUNICATIONS NETWORK

(30) Priorité: 19.03.2013 FR 1352455
(43) Date de publication de la demande: 27.01.2016
(73) Titulaire: Orange, 75015 Paris (FR)
(72) Inventeur: HARDOUIN, Eric, F-75015 Paris (FR)
(74) Mandataire: Fontenelle, Sandrine
(86) Numéro de dépôt international: PCT/FR2014/050634
(87) Numéro de publication internationale: WO 2014/147341

(56) Documents cités:
- WO-A2-2009/121025
- WO-A2-2010/036006

## Description

### Arrière-plan de l'invention

L'invention se rapporte au domaine général des télécommunications.

Elle concerne plus particulièrement la signalisation, dans un réseau de télécommunications cellulaire, de ressources allouées à un terminal pour communiquer sur ce réseau.

L'invention a ainsi une application privilégiée, mais non limitative, dans le contexte des réseaux cellulaires de télécommunications mobiles LTE (Long Term Evolution) tels que définis par le 3GPP (Third Generation Partnership Project), et notamment en voie descendante, c'est-à-dire dans le sens de communication de la station de base (ou eNodeB) vers les terminaux mobiles (ou UE pour « User Equipment »).

De façon connue, la capacité des réseaux cellulaires de télécommunications mobiles, et en particulier celle des réseaux LTE, est limitée par les interférences. Ces interférences peuvent être de différentes natures. Parmi les plus dommageables en terme de capacité du réseau cellulaire, on compte notamment :
- l'interférence SU-MIMO (pour Single User - Multiple Input Multiple Output) liée à l'usage d'antennes multiples en émission et en réception, et qui correspond à l'interférence générée entre des flux de données MIMO alloués à un même terminal ;
- l'interférence MU-MIMO (pour Multiple User - Multiple Input Multiple Output) qui correspond à l'interférence générée entre des flux de données MIMO alloués à des terminaux différents ; et
- l'interférence intercellulaire, générée entre des signaux émis par des cellules différentes et à destination de terminaux différents.

Diverses méthodes permettant de réduire l'effet de ces interférences sur les performances du réseau sont connues de l'état de la technique.

Ainsi, les interférences de type SU-MIMO et MU-MIMO peuvent être traitées notamment à l'aide d'une technique de précodage appliquée en émission. Cette méthode consiste en l'application de pondérations complexes aux flux de données émis par les antennes de la station de base de sorte à leur attribuer des propriétés spatiales particulières (par exemple une direction privilégiée). Ainsi, par exemple, on pourra faire en sorte, via ce précodage, de séparer dans l'espace des flux destinés à un même terminal (dans le cas SU-MIMO) ou à des terminaux différents (dans le cas MU-MIMO) afin de permettre au terminal récepteur de détecter chaque flux avec une interférence réduite de la part des autres flux.

L'interférence intercellulaire peut être réduite via l'utilisation de techniques dites CoMP (pour « Coordinated MultiPoint), visant à coordonner l'allocation de ressources et le précodage mis en oeuvre par les stations de base contrôlant des cellules voisines d'une cellule donnée, de sorte à minimiser l'interférence créée sur cette cellule par ses cellules voisines. Ces techniques sont décrites plus en détail dans le document TS 36.819 intitulé « Coordinated Multi-Point operation for LTE physical layer aspects », Release 11, édité par le 3GPP.

Les techniques de précodage les plus efficaces utilisées pour réduire l'interférence MU-MIMO et/ou l'interférence intercellulaire requièrent une connaissance précise en émission du canal de transmission des différents terminaux. Une telle connaissance n'est généralement pas disponible au niveau de la station de base (eNodeB), car elle nécessite une signalisation importante sur la voie de retour entre chaque terminal et la station de base.

Afin de limiter cette signalisation, les informations relatives à la connaissance du canal sont généralement quantifiées. Il s'ensuit une perte de précision de sorte que l'interférence n'est pas en pratique totalement supprimée par le précodage : une part non négligeable d'interférence résiduelle subsiste, ce qui affecte les performances du terminal.

Pour remédier à cet inconvénient, il est connu d'utiliser, au niveau des terminaux, des récepteurs non linéaires mettant en oeuvre des techniques d'annulation d'interférence, tel que par exemple des récepteurs MMSE-SIC (pour Successive Interference Cancellation ou annulation successive d'interférences). De manière générale, et par souci de simplification dans le cas d'un seul interféreur, un tel récepteur estime le flux de données interférent (correspondant à une interférence de type MU-MIMO ou intercellulaire) en mettant en oeuvre par exemple une étape de décodage (de canal) du signal de l'interféreur correspondant. Puis à partir de cette estimation du flux, de l'estimation du canal de l'interféreur et de la connaissance des paramètres de transmission alloués à cet interféreur, le récepteur reconstruit les signaux interférents reçus par le terminal. Le signal interférent reconstruit est ensuite soustrait au signal reçu par le terminal, le signal ainsi nettoyé de l'interférence étant utilisé alors pour détecter le signal utile destiné au terminal.

Les récepteurs non linéaires SIC peuvent traiter un ou plusieurs flux de données interférents destinés à un ou plusieurs terminaux dits interféreurs. Toutefois, comme indiqué précédemment, le processus d'annulation de l'interférence mis en oeuvre par ces récepteurs non linéaires nécessite la connaissance des paramètres de transmission du ou des interféreurs et notamment, dans le cadre d'un réseau de télécommunications LTE, du schéma de modulation et de codage associé à chaque interféreur, des blocs de ressource physiques (ou PRB pour « Physical Resource Block »), éventuellement de la séquence pilote dédiée (appelée DMRS pour « DeModulation Reference Signal ») si elle est utilisée, et de l'identifiant temporaire de réseau ou RNTI (Radio Network Temporary Identifier) attribué de manière unique au terminal interféreur pour l'identifier sur la cellule à laquelle il est attaché.

Pour ces raisons, les récepteurs MMSE-SIC avec décodage de canal de l'interférence sont envisagés communément pour traiter l'interférence SU-MIMO, puisque le terminal équipé du récepteur MMSE-SIC a accès à tous les paramètres de transmission des différents flux qui lui sont transmis. En revanche, leur utilisation pour le traitement de l'interférence MU-MIMO et intercellulaire en voie descendante est plus complexe.

Pour mieux illustrer ce propos, il convient de rappeler comment est réalisée l'allocation des paramètres de transmission dans un réseau LTE, et plus particulièrement comment est effectuée la signalisation des paramètres de transmission ainsi alloués.

Par souci de simplification, on ne traitera par la suite que l'interférence intercellulaire, sachant que des propos équivalents s'appliquent également à l'interférence MU-MIMO.

Les paramètres de transmission sont alloués à chaque terminal par la station de base contrôlant la cellule à laquelle est attaché le terminal. Ils sont, à l'exception de l'identifiant RNTI, communiqués à chaque terminal via un canal physique de contrôle dédié appelé PDCCH (Physical Downlink Control Channel). L'identifiant RNTI est signalé au terminal dans un message de signalisation dédié, et plus spécifiquement dans un message de configuration transmis sur le canal PDSCH (Physical Downlink Shared Channel) géré par les couches supérieures du réseau, et notamment par la couche de contrôle des ressources radio ou couche RRC (pour « Radio Resource Control »).

Le canal PDCCH est organisé selon plusieurs formats possibles, appelés formats de DCI (pour « Downlink Control Information »). Un format de DCI comporte plusieurs champs, chaque champ portant une information particulière (ex. blocs de transport ou PRB (Physical Resource Block) alloués (un ou deux blocs de transport peuvent être alloués), schémas de modulation et de codage ou MCS (pour « Modulation and Coding Scheme ») alloués pour chaque bloc de transport, etc.). Les bits d'information d'un canal PDCCH (c'est-à-dire les bits du format de DCI) sont ensuite associés à un code CRC (« Cyclic Redundancy Check ») pour permettre la détection d'erreur. La particularité de ce code CRC est qu'il est embrouillé avec l'identifiant RNTI du terminal auquel le canal PDCCH est destiné. Ceci permet au terminal de valider que le canal PDCCH qu'il décode lui est bien destiné. En effet, si un autre terminal (qui dispose d'un identifiant RNTI différent) tente de vérifier la validité du canal PDCCH à l'aide de cet autre identifiant RNTI, la vérification du code CRC lui retourne une erreur.

Les bits d'information ainsi que les bits du CRC sont ensuite codés selon un code convolutif, puis embrouillés par une séquence spécifique à la cellule, avant d'être modulés en QPSK puis transmis. Le rendement effectif du code convolutif, qui dépend du rendement du code ainsi que de l'adaptation de débit effectuée en sortie du codeur pour adapter le nombre de bits codés aux ressources disponibles, est adapté au niveau de protection requis par les conditions radio du terminal auquel le canal PDCCH est destiné. Ainsi, un canal PDCCH destiné à un terminal se trouvant dans de bonnes conditions radio (par exemple proche de la station de base qui le sert) n'a pas besoin de beaucoup de protection et est transmis avec un rendement effectif élevé, ou en d'autres termes sur un faible nombre de ressources. A l'inverse, un terminal se trouvant dans de mauvaises conditions radio, se voit allouer un canal PDCCH avec un rendement effectif faible, et occupant un nombre plus élevé de ressources.

Dans les réseaux LTE, les ressources occupées par un canal PDCCH alloué à un terminal ne sont pas connues à l'avance par ce dernier. Le terminal doit donc tester un ensemble de combinaisons de ressources possibles, et pour chaque combinaison candidate tenter de décoder un canal PDCCH potentiellement transmis sur ces ressources avec son identifiant RNTI, pour déterminer s'il lui est destiné. L'ensemble des ressources candidates pour un terminal donné est appelé un espace de recherche, et décrit dans le document 3GPP TS 36.213 v11.0.0 intitulé « Evolved Universal Radio Access ; Physical Layer Procedures (Release 11) », septembre 2012, en section 9.1.1 notamment. La position de l'espace de recherche dépend en particulier de la valeur de l'identifiant RNTI.

On comprend bien dès lors que la seule solution possible pour permettre à un terminal victime d'interférence intercellulaire ou MU-MIMO, d'acquérir la connaissance des paramètres de transmission de ses interféreurs afin de pouvoir mettre en oeuvre une méthode de traitement MMSE-SIC pour annuler cette interférence, est de tenter de décoder de manière aveugle l'ensemble des canaux PDCCH de la ou des cellules interférentes (c'est-à-dire des cellules servant des terminaux interféreurs pour le terminal équipé du récepteur MMSE-SIC).

Autrement dit, pour chaque cellule interférente, le terminal « victime » doit examiner chaque canal PDCCH susceptible d'avoir été transmis sur des ressources d'espaces de recherche correspondant à différentes valeurs de RNTI, jusqu'à trouver tous les canaux PDCCH effectivement transmis. Comme le terminal victime n'a pas connaissance des identifiants RNTI attribués aux autres terminaux, un test de toutes les valeurs de RNTI possibles doit être effectué. Une fois l'ensemble des PDCCH transmis par la cellule interférente considérée décodés, le terminal victime peut savoir quels sont les terminaux de cette cellule qui sont servis sur les mêmes ressources que lui et qui représentent donc des interféreurs pour lui. De plus, le terminal victime a accès aux paramètres de transmission de ses interféreurs et peut ainsi annuler leurs interférences à l'aide d'une technique MMSE-SIC.

Cette solution présente deux inconvénients majeurs.

Tout d'abord, le décodage aveugle des différents canaux PDCCH d'une cellule est une opération très complexe et particulièrement longue du fait des traitements mis en oeuvre. Elle est par ailleurs fortement consommatrice en énergie de la batterie du terminal. L'application en outre d'un tel décodage aveugle à plusieurs cellules interférentes pour permettre l'utilisation d'une technique de traitement MMSE-SIC en vue d'éliminer l'interférence inter-cellulaire est *a fortiori* difficilement envisageable.

De plus, la nécessité de tester pour chaque PDCCH candidat l'ensemble des valeurs possibles pour l'identifiant RNTI (il y en a 2¹⁶), afin de déterminer à la fois ce dernier et la validité du PDCCH candidat, rend ce procédé quasiment impossible à mettre en oeuvre avec des moyens de calculs réalistes.

Le document WO 2010/108136 propose une méthode permettant de faciliter l'annulation de l'interférence intercellulaire dans un réseau de télécommunications mobiles, et notamment dans un réseau LTE.

Cette méthode consiste à diviser l'ensemble des identifiants temporaires RNTI disponibles pour une cellule en deux sous-ensembles : un premier sous-ensemble d'identifiants RNTI (que l'on désigne dans la suite de ce document par RNTI « ouverts ») destinés à des terminaux susceptibles de causer des interférences, et un second sous-ensemble d'identifiants RNTI destinés à des terminaux susceptibles de subir des interférences. Les identifiants RNTI ouverts du premier sous-ensemble sont publiés (i.e. diffusés), de sorte à être connus des terminaux des cellules voisines. Chaque identifiant RNTI ouvert identifie de manière unique un terminal.

Ainsi, une station de base d'une cellule souhaitant rendre la transmission d'un canal PDCCH vers un terminal interféreur décodable par un terminal d'une cellule voisine pourra utiliser pour ce faire un identifiant RNTI ouvert. Le décodage des canaux PDCCH par un terminal victime d'interférences pour acquérir les paramètres de transmission de ses interféreurs est donc facilité puisqu'il peut se limiter aux RNTI ouverts publiés par les cellules, ainsi qu'aux espaces de recherche correspondants.

Le document WO 2010/108136 propose de signaler à un terminal qu'un (ou plusieurs) identifiant RNTI ouvert lui a été attribué, en lui envoyant cet identifiant RNTI ouvert via le canal de contrôle PDCCH ou via un canal physique partagé PDSCH (Physical Downlink Shared CHannel). Sur réception de cet identifiant, le terminal concerné peut alors décoder les canaux PDCCH qui lui sont destinés à l'aide de l'identifiant RNTI ouvert qui lui a été attribué.

Une telle méthode de signalisation peut s'avérer coûteuse en termes de ressources de signalisation, notamment lorsqu'un nombre important d'identifiants RNTI ouverts est attribué, chaque RNTI étant codé sur 16 bits selon le standard LTE. En effet, une signalisation d'un RNTI ouvert via un canal PDCCH implique d'ajouter les 16 bits du RNTI ouvert au format de DCI de ce canal PDCCH, ce qui diminue la couverture du canal PDCCH lorsque le terminal se trouve notamment en bordure de cellule et utilise déjà le format de PDCCH le plus robuste (c'est-à-dire celui qui occupe le nombre maximal de ressources allouable à un canal PDCCH).

Ceci est d'autant plus vrai que le statut « interféreur » d'un terminal au même titre que les ressources qui lui sont allouées sont susceptibles d'évoluer rapidement dans le temps, et donc de requérir une signalisation importante.

Par ailleurs, comme mentionné précédemment, selon cette méthode, un identifiant RNTI ouvert identifie de manière unique un terminal interféreur. Or le nombre de terminaux servis par une station de base d'une cellule peut être élevé (plusieurs dizaines voire centaines de terminaux). L'attribution d'un grand nombre d'identifiants RNTI ouverts par une station de base d'une cellule entraîne donc une grande complexité de calcul pour le décodage des canaux PDCCH associés, ainsi qu'une consommation d'énergie importante pour les terminaux mettant en oeuvre une méthode d'annulation successive d'interférences.

### Objer et résumé de l'invention

L'invention permet notamment de pallier aux inconvénients précités en proposant un procédé de signalisation, destiné à être mis en oeuvre par une station de base d'un réseau de télécommunications cellulaire, cette station de base contrôlant au moins une cellule du réseau à laquelle est attaché au moins un terminal identifié de façon unique sur cette cellule par un identifiant temporaire de réseau dit dédié, le procédé de signalisation comprenant :
- une étape d'attribution d'un identifiant temporaire de réseau dit ouvert, à un terminal dit interféreur identifié par la station de base parmi ledit au moins un terminal attaché à la cellule, comme étant susceptible d'interférer au moins une communication établie par un autre terminal attaché à cette cellule ou à une cellule voisine de cette cellule ;
- une étape de publication de cet identifiant temporaire de réseau ouvert ;
- une étape d'envoi d'un premier canal physique de contrôle selon un format prédéterminé au terminal interféreur, comprenant une représentation condensée de l'identifiant temporaire de réseau ouvert attribué au terminal interféreur, ce premier canal physique étant codé à l'aide de l'identifiant temporaire de réseau dédié du terminal interféreur ; et
- une étape d'envoi d'un second canal physique de contrôle au terminal interféreur lui allouant des ressources de transmission sur le réseau cellulaire, ce second canal étant codé à l'aide de l'identifiant temporaire de réseau ouvert.

Corrélativement, l'invention vise aussi une station de base d'un réseau de télécommunications cellulaire, contrôlant au moins une cellule du réseau à laquelle est attaché au moins un terminal identifié de façon unique sur cette cellule par un identifiant temporaire de réseau dit dédié, cette station de base comprenant :
- un module d'attribution d'un identifiant temporaire de réseau dit ouvert à un terminal dit interféreur identifié parmi ledit au moins un terminal attaché à la cellule comme étant susceptible d'interférer au moins une communication établie par un autre terminal attaché à cette cellule ou à une cellule voisine ;
- un module de publication de cet identifiant temporaire de réseau ouvert ;
- un module d'envoi d'un premier canal physique de contrôle selon un format prédéterminé au terminal interféreur comprenant une représentation condensée de cet identifiant temporaire de réseau ouvert, ce module d'envoi étant apte à coder le premier canal physique à l'aide de l'identifiant temporaire de réseau dédié du terminal interféreur ; et
- un module d'envoi d'un second canal physique de contrôle au terminal interféreur lui allouant des ressources de transmission sur le réseau cellulaire, ce module d'envoi étant apte à coder le second canal physique à l'aide de l'identifiant temporaire de réseau ouvert attribué au terminal interféreur.

Par souci de simplification, on considère qu'un terminal est un terminal interféreur susceptible d'interférer une communication établie par un autre terminal (aussi désigné par terminal « victime »), lorsque les transmissions à destination du terminal interféreur en provenance de la cellule à laquelle il est attaché (ou plus précisément en provenance de la station de base contrôlant cette cellule) constituent des signaux d'interférence pour une communication établie par le terminal victime.

Par publication d'un identifiant temporaire de réseau ouvert, on entend ici le fait de porter cet identifiant temporaire de réseau ouvert à la connaissance d'autres terminaux (et/ou de stations de base voisines), autrement dit de le rendre public ou de le diffuser, de sorte que ces terminaux puissent décoder le canal physique de contrôle (ex. canal PDCCH) associé à cet identifiant (autrement dit, codé avec cet identifiant), et déterminer ainsi les paramètres de transmission alloués sur un intervalle de temps de transmission (TTI) au terminal auquel cet identifiant temporaire de réseau ouvert est attribué, afin de supprimer l'interférence générée par la transmission du réseau cellulaire vers celui-ci à l'aide par exemple d'une méthode d'annulation successive de l'interférence. Cette publication peut se faire séparément pour chaque identifiant ouvert attribué à un terminal interféreur, ou en variante, de façon groupée, i.e. l'ensemble des identifiants de réseau ouverts sélectionnés par une station de base pour une cellule peut être publié simultanément.

A cet effet, l'étape de publication de l'identifiant temporaire de réseau ouvert peut comprendre notamment la diffusion de cet identifiant auprès des terminaux attachés à la cellule contrôlée par la station de base, par exemple via des informations système diffusées par la station de base au sein de la cellule sur un canal physique partagé (ex. canal PDSCH).

Cette variante permet aux terminaux attachés à la même cellule que le terminal interféreur d'identifier rapidement les paramètres de transmission de ce terminal (notamment les ressources allouées à ce terminal) en limitant leur recherche aux canaux physiques de contrôle codés par cet identifiant ouvert, et de pouvoir ainsi mettre en oeuvre une annulation successive d'interférence afin d'éliminer l'interférence MU-MIMO générée par ce terminal interféreur.

En variante, l'étape de publication de l'identifiant temporaire de réseau ouvert peut comprendre la diffusion de cet identifiant auprès de terminaux attachés à au moins une autre cellule contrôlée par la même station de base, et voisine de la cellule servant le terminal interféreur.

Selon une autre variante encore, l'étape de publication de l'identifiant temporaire de réseau ouvert peut comprendre la diffusion de cet identifiant ouvert auprès d'au moins une autre station de base contrôlant une cellule voisine de la cellule servant le terminal interféreur (typiquement auprès de la ou des cellules voisines servant le ou les terminaux interférés).

Cette variante est particulièrement adaptée pour la suppression de l'interférence intercellulaire.

En d'autres mots, l'invention s'applique aussi bien à la suppression de l'interférence MU-MIMO qu'à la suppression de l'interférence intercellulaire.

Elle propose une configuration d'un terminal interféreur selon deux identifiants temporaires de réseau, à savoir :
- selon un identifiant temporaire de réseau dédié, réservé au terminal interféreur et l'identifiant de manière unique sur la cellule contrôlée par la station de base, et
- selon un identifiant temporaire de réseau ouvert, susceptible d'être partagé par plusieurs terminaux interféreurs.

Pour permettre une flexibilité dans l'allocation des canaux physiques de contrôle entre les différents terminaux interféreurs, l'invention propose avantageusement de signaler de façon dynamique à l'un de ces terminaux interféreurs qu'un canal physique de contrôle codé avec un identifiant temporaire ouvert lui est destiné dans un intervalle de temps de transmission donné (ou TTI pour « Time Transmission Interval »). A cette fin, la station de base envoie, dans ce TTI, un canal physique de contrôle (premier canal au sens de l'invention) dans un format prédéterminé destiné à ce terminal interféreur, codé à l'aide de son identifiant temporaire de réseau dédié, et contenant une représentation condensée de l'identifiant temporaire de réseau ouvert attribué à ce terminal.

Le format prédéterminé de ce premier canal physique de contrôle indique dynamiquement au terminal interféreur qu'un second canal physique de contrôle lui étant destiné est émis dans le même TTI. Il lui indique également quel identifiant temporaire de réseau ouvert utiliser pour déterminer sur quel espace de recherche rechercher ce second canal physique et le décoder afin d'identifier quelles ressources de transmission lui sont allouées pour ce TTI. L'identifiant temporaire de réseau utilisé pour coder le second canal physique de contrôle étant ouvert et publié auprès des autres terminaux de la cellule et/ou des cellules voisines, il est possible à ces autres terminaux de rechercher et de décoder, moyennant une complexité raisonnable, ce second canal physique de contrôle, et d'annuler, via par exemple une technique d'annulation successive d'interférence, l'interférence générée par le terminal interféreur grâce aux paramètres de transmission identifiés dans ce second canal.

Ainsi, les terminaux interférés peuvent restreindre leur recherche de canaux physiques de contrôle à l'espace de recherche défini par cet identifiant temporaire de réseau ouvert.

Par ailleurs, plusieurs terminaux interféreurs peuvent partager le même identifiant temporaire de réseau ouvert, la station de base pouvant déterminer de façon dynamique quel terminal interféreur servir sur cet identifiant ouvert à chaque TTI.

La solution proposée par l'invention est par conséquent très flexible et permet de s'adapter à une évolution rapide du statut interféreur/non interféreur des terminaux.

Elle permet par ailleurs de gérer un grand nombre de terminaux interféreurs tout en limitant le nombre d'identifiants temporaires ouverts nécessaires, et donc la complexité de décodage induite au niveau des terminaux victimes. Le nombre d'identifiants temporaires ouverts à définir résulte bien entendu d'un compromis entre complexité, ressources de signalisation nécessaires, et performances du réseau.

En outre, l'identifiant temporaire de réseau ouvert est avantageusement transmis au terminal interféreur selon une représentation condensée (par rapport à l'identifiant temporaire ouvert à proprement parler), de sorte à limiter les ressources occupées dans le premier canal de contrôle pour informer le terminal interféreur de l'identifiant temporaire ouvert qui lui est attribué. Par représentation condensée, on entend de manière générale une information de taille réduite par rapport à l'identifiant temporaire ouvert qu'elle représente.

A titre d'exemple, si la station de base choisit de sélectionner parmi les identifiants temporaires de réseau disponibles pour une cellule qu'elle contrôle, K identifiants temporaires de réseau destinés à être ouverts (autrement dit, publiés auprès des stations de base voisines et/ou des terminaux de la cellule et des cellules voisines), une représentation condensée d'un tel identifiant temporaire ouvert peut consister en un numéro compris entre 1 et K (ou en une représentation binaire de ce numéro) désignant de manière unique cet identifiant ouvert parmi les K identifiants sélectionnés par la station de base.

Dans un mode particulier de réalisation, le procédé de signalisation comprend en outre une étape de diffusion d'un message sur la cellule comprenant une correspondance entre l'identifiant temporaire de réseau ouvert et sa représentation condensée.

Cette correspondance entre l'identifiant temporaire de réseau ouvert et sa représentation condensée peut être publiée par la station de base, par exemple dans les informations système ou les messages de signalisation ou de configuration qu'elle diffuse sur les cellules qu'elle contrôle, via notamment un canal physique partagé (ex. canal PDSCH).

On note que l'identifiant temporaire de réseau ouvert et la correspondance avec sa forme condensée peuvent être publiés par la station de base dans un même et unique message, ou dans des messages distincts.

Dans une autre variante de réalisation, la correspondance entre l'identifiant temporaire de réseau ouvert et sa représentation condensée peut être déduite par le terminal interféreur à partir de la publication des identifiants ouverts réalisée par la station de base (par exemple, si cette publication comprend la liste des K identifiants temporaires de réseau ouverts mentionnés précédemment, l'ordre des identifiants ouverts dans cette liste peut être utilisé pour déduire une représentation condensée au sens de l'invention des identifiants ouverts).

Dans une autre variante encore, cette correspondance peut être transmise au terminal interféreur de manière semi-statique à l'aide d'un message de signalisation dédié géré par les couches hautes du réseau, typiquement par la couche de gestion des ressources radio du réseau. Ce message de signalisation dédié peut être émis notamment sur un canal physique partagé (ex. canal PDSCH dans un réseau LTE).

Il convient de noter que l'utilisation d'une représentation condensée pour désigner l'identifiant temporaire ouvert attribué au terminal interféreur vise essentiellement à limiter la consommation des ressources dans le premier canal physique de contrôle : elle est en revanche transparente pour les terminaux victimes mettant en oeuvre une annulation d'interférences basée sur les paramètres de transmission et les ressources allouées au terminal interféreur dans le second canal physique.

L'invention a donc une application privilégiée mais non limitative lorsque le réseau de télécommunications cellulaire est un réseau LTE et :
- l'identifiant temporaire de réseau ouvert et l'identifiant temporaire de réseau dédié attribués au terminal interféreur sont des identifiants de type RNTI ;
- le premier et le second canal physique de contrôle sont des canaux PDCCH ; et
- le cas échéant, le message de signalisation dédié comprenant la correspondance entre l'identifiant temporaire de réseau ouvert et sa représentation condensée est un message de signalisation RRC (Radio Resource Control).

Dans un mode particulier de réalisation de l'invention, le format prédéterminé du premier canal physique de contrôle comprend un champ contenant une séquence de bits prédéterminée.

Cette séquence de bits est par exemple formée d'un nombre prédéterminé de bits égaux à 1.

La présence de cette séquence permet d'identifier aisément que le premier canal physique de contrôle indique l'existence d'un second canal physique de contrôle destiné au terminal interféreur et codé à l'aide de l'identifiant temporaire ouvert attribué à ce terminal interféreur. Le format de ce premier canal physique de contrôle peut avantageusement reprendre le même nombre de bits que les formats existant pour les canaux physiques de contrôle (par exemple que le format 1A défini dans la norme 3GPP LTE) afin de ne pas requérir l'implémentation d'une opération de décodage supplémentaire en dehors de celles déjà prévues au niveau de chaque terminal pour obtenir les paramètres de transmission qui lui sont alloués.

En variante, le format du premier canal physique de contrôle comprend un nombre de bits inférieur à un format du second canal physique de contrôle.

Cette variante, bien que nécessitant l'implémentation d'une opération de décodage adaptée à ce nouveau format, permet de réduire les ressources radio nécessaires pour signaler l'attribution de l'identifiant temporaire de réseau ouvert au terminal interféreur. Il suffit en pratique d'avoir une séquence comportant un nombre de bits permettant de contenir la représentation condensée de chaque identifiant temporaire ouvert.

L'invention s'appuie non seulement sur la station de base mettant en oeuvre un procédé de signalisation pour informer un terminal interféreur d'un identifiant temporaire ouvert qu'elle lui a attribué, mais également sur le terminal interféreur à proprement parler qui est apte à déterminer à partir d'un premier canal de contrôle, empruntant un format prédéterminé et contenant une représentation de cet identifiant temporaire ouvert attribué par la station de base, qu'un second canal de contrôle lui allouant des ressources pour communiquer sur le réseau cellulaire lui est destiné et est codé selon cet identifiant temporaire ouvert.

Selon un autre aspect, l'invention vise donc également un procédé de communication, destiné à être mis en oeuvre par un terminal interféreur attaché à une cellule d'un réseau de télécommunications cellulaire et identifié de manière unique dans cette cellule par un identifiant temporaire de réseau dit dédié, cette cellule étant contrôlée par une station de base, et le terminal interféreur étant susceptible d'interférer au moins une communication établie par un autre terminal de cette cellule ou d'une cellule voisine à cette cellule, le procédé de communication comprenant :
- une étape de décodage d'un premier canal physique de contrôle à l'aide de l'identifiant temporaire de réseau dédié, ce premier canal physique de contrôle ayant un format prédéterminé et comprenant une représentation condensée d'un identifiant temporaire de réseau dit ouvert attribué au terminal interféreur par la station de base et publié ou destiné à être publié par celle-ci ;
- sur détection du format prédéterminé du premier canal physique de contrôle :
   o une étape de détermination de l'identifiant temporaire de réseau ouvert attribué au terminal interféreur à partir de la représentation condensée contenue dans le premier canal physique ; et
   o une étape de décodage d'un second canal physique de contrôle à l'aide de l'identifiant temporaire de réseau ouvert ainsi déterminé, ce second canal physique de contrôle allouant des ressources de transmission sur le réseau cellulaire au terminal interféreur ;
- une étape d'utilisation des ressources de transmission allouées dans ce second canal pour communiquer sur le réseau cellulaire.

Corrélativement, l'invention vise aussi un terminal attaché à une cellule d'un réseau de télécommunications cellulaire et identifié de manière unique sur cette cellule par un identifiant temporaire de réseau dit dédié, cette cellule étant contrôlée par une station de base, ce terminal dit interféreur étant susceptible d'interférer au moins une communication établie par un autre terminal attaché à cette cellule et/ou à une cellule voisine à cette cellule, et comprenant :
- un module de décodage d'un premier canal physique de contrôle à l'aide de l'identifiant temporaire de réseau dédié, ce premier canal physique de contrôle ayant un format prédéterminé et comprenant une représentation condensée d'un identifiant temporaire de réseau dit ouvert attribué au terminal interféreur et publié ou destiné à être publié par la station de base ;
- un module, activé sur détection du format prédéterminé du premier canal physique de contrôle, de détermination de l'identifiant temporaire de réseau ouvert à partir de la représentation condensée contenue dans le premier canal physique de contrôle ;
- un module, activé sur détection du format prédéterminé du premier canal physique de contrôle, de décodage d'un second canal physique de contrôle à l'aide de l'identifiant temporaire de réseau ouvert déterminé par le module de détermination, ce second canal physique de contrôle allouant des ressources de transmission sur le réseau cellulaire au terminal interféreur ; et
- un module d'utilisation des ressources de transmission allouées dans ce second canal pour communiquer sur le réseau cellulaire.

Selon un autre aspect, l'invention vise aussi un système d'un réseau de télécommunications cellulaire comprenant :
- une station de base selon l'invention contrôlant au moins une cellule du réseau de télécommunications cellulaire ;
- un terminal interféreur selon l'invention attaché à cette cellule ; et
- un terminal interféré par ce terminal interféreur, ce terminal interféré étant attaché à la cellule du terminal interféreur ou à une cellule du réseau voisine, et étant apte à mettre en oeuvre une technique d'annulation d'interférence à l'aide de l'identifiant temporaire de réseau ouvert alloué au terminal interféreur et publié par la station de base.

Le procédé de communication, le terminal et le système bénéficient d'avantages similaires à la station de base et au procédé de signalisation.

Dans un mode particulier de réalisation, les différentes étapes du procédé de signalisation et du procédé de communication sont déterminées par des instructions de programmes d'ordinateurs.

En conséquence, l'invention vise aussi un programme d'ordinateur sur un support d'informations, ce programme étant susceptible d'être mis en oeuvre dans une station de base ou plus généralement dans un ordinateur, ce programme comportant des instructions adaptées à la mise en oeuvre des étapes d'un procédé de signalisation tel que décrit ci-dessus.

L'invention vise aussi un programme d'ordinateur sur un support d'informations, ce programme étant susceptible d'être mis en oeuvre dans un terminal ou plus généralement dans un ordinateur, ce programme comportant des instructions adaptées à la mise en oeuvre des étapes d'un procédé de communication tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

On peut également envisager, dans d'autres modes de réalisation, que le procédé de signalisation, le procédé de communication, la station de base, le terminal et le système selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 représente, de façon schématique, un système d'un réseau de télécommunications, une station de base et un terminal conformes à l'invention, dans un mode particulier de réalisation ;
- les figures 2 et 3 représentent schématiquement l'architecture matérielle de la station de base et du terminal illustrés à la figure 1 ;
- la figure 4 représente, sous forme d'ordinogramme, les principales étapes d'un procédé de signalisation selon l'invention dans un mode particulier de réalisation dans lequel il est mis en oeuvre par la station de base de la figure 1 ;
- la figure 5 représente, sous forme d'ordinogramme, les principales étapes d'un procédé de communication selon l'invention dans un mode particulier de réalisation dans lequel il est mis en oeuvre par le terminal de la figure 1 ; et
- les figures 6A et 6B présentent des exemples de formats prédéterminés du canal physique de contrôle pouvant être utilisés dans le cadre de l'invention.

### Description détaillée de l'invention

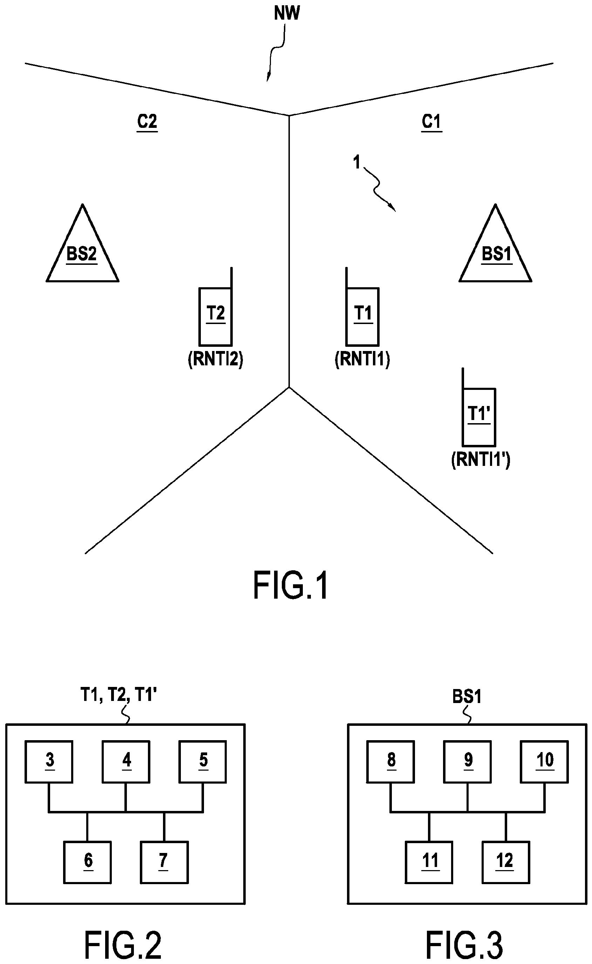

La **figure 1** décrit, dans son environnement, un système 1 d'un réseau de télécommunications cellulaire NW, conforme à l'invention, dans un mode particulier de réalisation.

Dans ce mode particulier de réalisation, le réseau de télécommunications cellulaire NW est un réseau mobile LTE, tel que défini par le 3GPP. Chaque cellule du réseau NW est contrôlée par une station de base (ou eNodeB) servant les différents terminaux (ou UEs pour User Equipments) attachés à la cellule.

A titre illustratif, deux cellules C1 et C2 du réseau cellulaire NW sont représentées sur la figure 1, la cellule C1 étant contrôlée par la station de base BS1 et la cellule C2 étant contrôlée par la station de base BS2. Chaque station de base sert un ou plusieurs terminaux présent(s) dans la (ou les) cellule(s) qu'elle contrôle. Ainsi, sur la figure 1, on envisage un terminal T1 et un terminal T1' attachés à la cellule C1 et servis par la station de base BS1, et un terminal T2 attaché à la cellule C2 et servi par la station de base BS2.

Bien entendu aucune limitation n'est attachée au nombre de stations de base considérées, ni au nombre de cellules gérées par une station de base, ni encore au nombre de terminaux attachés à chaque cellule.

Conformément au standard LTE, chaque terminal attaché à une cellule se voit attribuer un identifiant temporaire de réseau connu sous le nom de RNTI par la station de base contrôlant cette cellule, afin de communiquer sur le réseau NW. De façon connue de l'homme du métier, cet identifiant RNTI est un identifiant dédié, c'est-à-dire réservé au terminal et qui l'identifie de manière unique sur la cellule à laquelle il est attaché. Ainsi, dans l'exemple envisagé ici, la station de base BS1 attribue un identifiant temporaire de réseau dédié RNTI1 au terminal T1 et un identifiant temporaire de réseau dédié RNTI1' au terminal T1', et la station de base BS2 attribue un identifiant temporaire de réseau dédié RNTI2 au terminal T2.

Pour mieux illustrer l'invention, on suppose ici que le terminal T1 est susceptible d'interférer les communications sur le réseau NW du terminal T1' attaché à la même cellule que lui, c'est-à-dire à la cellule C1 (en créant de l'interférence MU-MIMO par exemple), ainsi que les communications sur le réseau NW du terminal T2 attaché à la cellule C2 (interférence intercellulaire). En d'autres mots, le terminal T1' et le terminal T2 sont victimes des interférences générées par les transmissions en provenance de la station de base BS1 et destinées au terminal T1.

Bien entendu, ces hypothèses ne sont pas limitatives en soi, un terminal pouvant être interféreur pour certains terminaux (c'est-à-dire que les transmissions du réseau vers ce terminal interféreur constituent de l'interférence pour les communications établies par ces terminaux), et subir des interférences (i.e. être interféré) générées par d'autres terminaux (c'est-à-dire par les transmissions du réseau vers ces autres terminaux).

Conformément à l'invention, le système 1 comprend :
- au moins une station de base conforme à l'invention contrôlant au moins une cellule du réseau de télécommunications cellulaire. Cette station de base est dans l'exemple envisagé ici la station de base BS1 qui contrôle la cellule C1 ;
- au moins un terminal interféreur attaché à cette cellule, à savoir, dans l'exemple envisagé à la figure 1, le terminal T1 ; et
- au moins un terminal interféré par ce terminal interféreur, et attaché à la cellule du terminal interféreur ou à une cellule du réseau voisine : en l'occurrence ici, deux terminaux interférés sont considérés, à savoir les terminaux T1' et T2.

Aucune limitation n'est toutefois attachée aux nombres de terminaux interféreurs et interférés considérés, ni au type d'interférences créées par le terminal interféreur. Ainsi, l'invention peut s'appliquer aussi bien en présence d'interférences de type MU-MIMO générées au sein d'une même cellule comme décrit précédemment, et/ou en présence d'interférences intercellulaires entre des signaux destinés à des terminaux attachés à des cellules voisines.

Les terminaux T1, T1' et T2 peuvent être des terminaux quelconques aptes à communiquer sur le réseau LTE NW, tels que par exemple des téléphones mobiles, des téléphones intelligents (ou « Smartphones »), des ordinateurs portables, etc.

Dans le mode de réalisation décrit ici, par souci de simplification, les terminaux T1, T1' et T2 sont tous des terminaux LTE conformes à l'invention, équipés chacun d'un récepteur non linéaire de type MMSE-SIC, autrement dit, d'un récepteur non linéaire mettant en oeuvre une technique d'annulation successive d'interférence. De tels récepteurs sont connus en soi et ne seront pas décrits davantage ici : ainsi, à titre d'exemple, il peut s'agir de récepteurs non linéaires mettant en oeuvre un décodage de canal à décisions dures, ou de récepteurs non linéaires mettant en oeuvre un décodage de canal turbo (ou itératif) à décisions souples, tels que décrits notamment dans la contribution R1-090232, 3GPP TSG RAN WG1, de janvier 2009 intitulée « Comparing performance, complexity and latency of SC-FDMA SIC and OFDM MLD ».

Dans le mode de réalisation décrit ici, ces terminaux ont l'architecture matérielle d'un ordinateur, telle qu'illustrée à la **figure 2****.**

Plus spécifiquement, chaque terminal comprend notamment un processeur 3, une mémoire morte 4, une mémoire vive 5, une mémoire non volatile 6 et des moyens de communication 7 sur le réseau NW de télécommunications LTE, connus en soi.

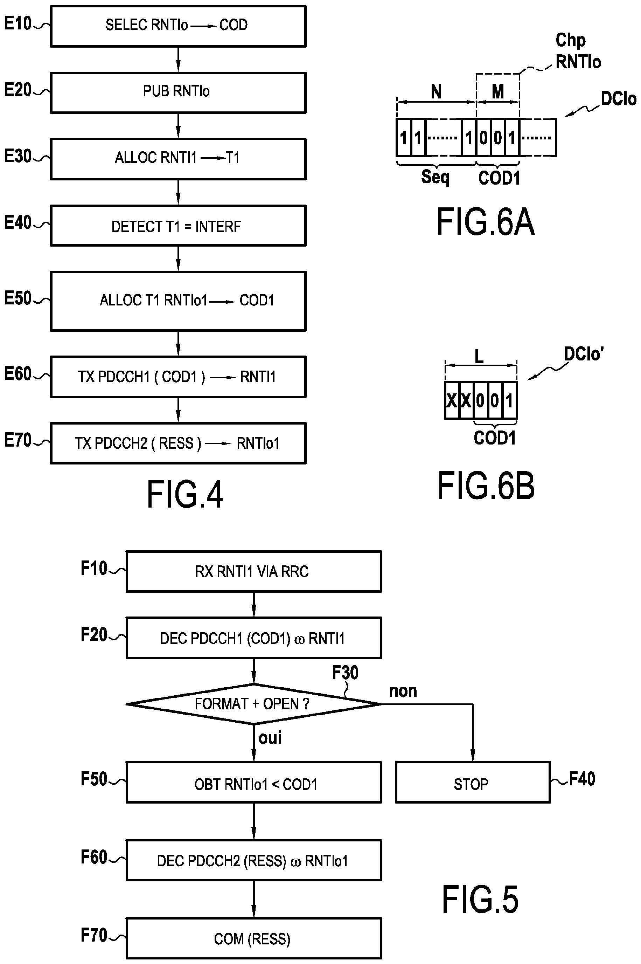

La mémoire morte 4 de chaque terminal constitue un support d'enregistrement conforme à l'invention, lisible par le processeur 3 et sur lequel est enregistré un programme d'ordinateur comportant des instructions pour l'exécution des étapes d'un procédé de communication conforme à l'invention, dont les étapes seront décrites ultérieurement en référence à la figure 5 dans un mode particulier de réalisation.

Ce programme d'ordinateur définit, de façon équivalente, des modules logiciels et fonctionnels des terminaux T1, T1' et T2 aptes à exécuter les différentes étapes du procédé de communication et à interagir avec les composants des terminaux décrits précédemment en référence à la figure 2, tels que notamment un module de décodage d'un premier canal physique de contrôle (en l'occurrence d'un premier canal PDCCH pour un réseau LTE) ayant un format prédéterminé à l'aide de l'identifiant temporaire de réseau dédié du terminal considéré, un module de détermination d'un identifiant temporaire de réseau ouvert à partir d'une représentation condensée contenue dans le premier canal physique de contrôle, un module de décodage d'un second canal physique de contrôle allouant des ressources au terminal à l'aide de cet identifiant temporaire de réseau ouvert et un module d'utilisation des ressources de transmission allouées dans le second canal pour communiquer sur le réseau.

Il convient de noter qu'il n'est pas nécessaire à la mise en oeuvre de l'invention que tous les terminaux aptes à communiquer sur le réseau NW implémentent un récepteur non linéaire utilisant une technique d'annulation d'interférence.

De même, tous les terminaux aptes à communiquer sur le réseau NW ne sont pas nécessairement conformes à l'invention, autrement dit, configurés de sorte à pouvoir décoder des identifiants temporaires ouverts attribués par leur station de base respective afin de permettre aux autres terminaux d'annuler l'interférence qu'ils génèrent. Ainsi, dans l'exemple envisagé ici, il suffit que T1 soit conforme à l'invention, et que les terminaux T1' et T2 soient aptes à décoder un canal PDCCH codé à l'aide d'un identifiant temporaire RNTI ouvert attribué par la station de base BS1 au terminal T1, et à appliquer une méthode d'annulation d'interférence aux signaux interférents émis par la station de base BS1 à destination du terminal T1 à l'aide des paramètres de transmission obtenus en décodant le canal PDCCH émis par la station de base BS1 sur la cellule C1.

Comme mentionné précédemment, la station de base BS1 est conforme à l'invention.

Dans le mode de réalisation décrit ici, elle dispose de l'architecture matérielle d'un ordinateur, telle qu'illustrée à la **figure 3****,** et comprend notamment un processeur 8, une mémoire morte 9, une mémoire vive 10, une mémoire non volatile 11 et des moyens de communication 12 sur le réseau NW de télécommunications LTE, connus en soi. Ces moyens de communication 12 lui permettent en particulier de communiquer d'une part avec les terminaux attachés à la cellule C1 et le cas échéant, à d'autres cellules voisines de la cellule C1 contrôlées par la station de base BS1, et d'autre part, avec les stations de base des cellules voisines, comme par exemple avec la station de base BS2 de la cellule C2.

La mémoire morte 9 de la station de base BS1 constitue un support d'enregistrement conforme à l'invention, lisible par le processeur 8 et sur lequel est enregistré un programme d'ordinateur comportant des instructions pour l'exécution des étapes d'un procédé de signalisation conforme à l'invention, dont les étapes seront décrites ultérieurement en référence à la figure 4 dans un mode particulier de réalisation.

Ce programme d'ordinateur définit, de façon équivalente, des modules logiciels et fonctionnels de la station de base aptes à exécuter les étapes du procédé de signalisation et à interagir avec les composants de la station de base BS1 décrits précédemment en référence à la figure 3. Ces modules logiciels sont notamment un module d'attribution, à un terminal interféreur (ex. T1), d'un identifiant temporaire RNTI ouvert, un module de publication de cet identifiant temporaire de réseau ouvert auprès des terminaux de la cellule C1 et/ou des cellules voisines de C1 contrôlées par la station de base BS1, et/ou auprès d'autres stations de base que la station BS1 contrôlant des cellules voisines de la cellule C1 (ex. BS2), un module d'envoi d'un premier canal physique de contrôle (PDCCH) selon un format prédéterminé au terminal interféreur comprenant une représentation condensée de l'identifiant temporaire ouvert et codé à l'aide de l'identifiant temporaire dédié du terminal interféreur, et un module d'envoi d'un second canal physique de contrôle allouant des ressources de transmission sur le réseau cellulaire au terminal interféreur, ce second canal étant codé à l'aide de l'identifiant temporaire ouvert attribué au terminal interféreur.

Nous allons maintenant décrire en référence aux **figures 4 et 5****,** les principales étapes d'un procédé de signalisation et d'un procédé de communication conformes à l'invention, dans un mode particulier de réalisation dans lequel ces étapes sont mises en oeuvre respectivement par la station de base BS1 et par le terminal T1 de la figure 1.

Comme mentionné précédemment, on suppose que le terminal T1 est un terminal interféreur, autrement dit qu'il est susceptible par le biais de ses communications avec la station de base BS1 d'interférer les communications établies par d'autres terminaux sur le réseau NW.

Par souci de simplification, on se limite à une interférence intercellulaire générée par les transmissions de la station de base BS1 vers le terminal T1 attaché à la cellule C1 sur les communications du terminal T2 attaché à la cellule C2. Le traitement de l'interférence de type MU-MIMO susceptible d'être générée par les transmissions destinées au terminal T1 sur les communications du terminal T1' attaché à la cellule C1 est abordé ultérieurement.

On suppose qu'au cours d'une étape préliminaire, la station de base BS1 sélectionne, parmi l'ensemble des identifiants temporaires RNTI disponibles pour la cellule C1, un sous-ensemble d'identifiants RNTI dits « ouverts », destinés à être publiés auprès des cellules voisines et des terminaux de la cellule C1 (étape E10 de la figure 4).

Dans le mode de réalisation décrit ici, le sous-ensemble sélectionné correspond à une plage comprenant un nombre limité P d'identifiants RNTI contigus, par exemple, 1, 4, 8 ou 16 identifiants.

Conformément à l'invention, chaque identifiant temporaire ouvert RNTIoi, i=1,...P, est représenté sous forme condensée par un code COD1,...,CODP respectivement.

Ce code correspond par exemple à une représentation binaire du rang occupé par chaque identifiant temporaire dans la liste des identifiants ouverts sélectionnés par la base BS1. Par exemple ici, si cette liste comprend P=8 éléments, COD1= « 001 » signifie que l'identifiant ouvert considéré est le premier identifiant de cette liste.

En variante, d'autres types de représentation condensée peuvent être envisagés dès lors qu'elles permettent d'établir une correspondance unique avec un identifiant temporaire ouvert sélectionné par la base BS1 et qu'elles permettent de limiter les ressources nécessaires à la représentation des identifiants ouverts par rapport à ces identifiants eux-mêmes (autrement dit pour un identifiant RNTI de 16 bits, une représentation condensée de cet identifiant utilise moins de 16 bits).

Dans le mode de réalisation décrit ici, la station de base BS1 diffuse un message sur la cellule C1 (par exemple sur un canal partagé PDSCH) comprenant la liste des identifiants ouverts sélectionnés RNTIoi, i=1,...P en correspondance avec leurs représentations condensées COD1,...,CODP. Ce message est reçu par l'ensemble des terminaux attachés à la cellule C1 et notamment par les terminaux T1 et T1'. Dans ce mode de réalisation, par le biais de ce message, la station de base BS1 non seulement publie la liste des identifiants ouverts auprès des terminaux de la cellule C1, mais informe également ces terminaux (et notamment le terminal T1) de la correspondance entre les identifiants ouverts et leurs représentations condensées.

Dans le mode de réalisation décrit ici, la station de base BS1 publie (i.e. diffuse) par ailleurs les identifiants RNTI ouverts sélectionnés auprès des stations de base des cellules voisines de la cellule C1 et notamment auprès de la station de base BS2 (étape E20).

Comme mentionné précédemment, par publication on entend ici le fait de porter les identifiants temporaires RNTI ouverts à la connaissance des autres terminaux, autrement dit de les rendre publics, de sorte à faciliter le décodage par ces autres terminaux des canaux physiques PDCCH associés à ces identifiants (autrement dit, codés avec ces identifiants), et déterminer ainsi les paramètres de transmission alloués aux terminaux auxquels ces identifiants temporaires de réseau ouverts sont attribués, afin de supprimer l'interférence générée par ceux-ci.

Cette publication est réalisée ici par la station de base BS1 via l'envoi d'un message de signalisation contenant la liste des identifiants RNTI ouverts sélectionnés.

Ce message de signalisation peut être émis par la station de base BS1 à destination des stations de base des cellules voisines sur l'interface X2 du réseau LTE NW, moyennant la définition d'un nouveau message approprié. L'interface X2 est connue de l'homme du métier : son rôle est de permettre le transport de paquets de données et d'informations de contrôle entre les stations de base du réseau NW. Elle est décrite notamment dans le document 3GPP 36.423.

En variante, la station de base BS1 peut émettre le message de signalisation contenant la liste des identifiants RNTI ouverts sélectionnés, sur une liaison de type fibre point-à-point établie avec les stations de base des cellules voisines (et notamment avec la station de base BS2).

Dans un autre mode de réalisation dans lequel la station de base BS1 contrôle plusieurs cellules distinctes (dont la cellule C1), la station de base BS1 transmet un message de signalisation contenant la liste des identifiants RNTI ouverts de la cellule C1 aux terminaux des cellules qu'elle contrôle et qui sont voisines de la cellule C1. A cet effet, la station de base BS1 s'appuie par exemple sur la signalisation gérée par la couche RRC de gestion des ressources radio du réseau. Cette couche RRC est définie notamment dans le document 3GPP TS 36.331 intitulé « Evolved Universal Terrestrial Radio Access (E-UTRA); Radio Resource Control (RRC); Protocol Spécification », Release 11, décembre 2012.

Le message de signalisation alors envoyé par la station de base BS1 peut être notamment un message d'information système émis indépendamment vers chaque cellule contrôlée par la station de base BS1 sur un canal physique partagé PDSCH. De cette sorte, aucune interface réseau n'est nécessaire pour cette signalisation.

Il convient de noter que la sélection d'une plage d'identifiants RNTI ouverts contigus permet une signalisation spectralement plus efficace. En effet, pour signaler la liste des identifiants RNTI ouverts sélectionnés par la station de base BS1, il est suffisant que le message de signalisation émis par la station de base BS1 contienne un numéro indiquant le numéro du premier identifiant RNTI ouvert de la plage, et d'un nombre indiquant le nombre d'identifiants RNTI ouverts sélectionnés par la station de base BS1.

En variante, le message de signalisation émis par la station de base BS1 à destination des stations de base des cellules voisines contient chaque identifiant RNTI ouvert sélectionné par la station de base BS1 et codé sur 16 bits.

La liste des identifiants RNTI ouverts sélectionnés par la station de base BS1 est reçue par les stations de base des cellules voisines, et notamment par la station de base BS2.

La station de base BS2 (ainsi que les autres stations de base) publie alors à son tour la liste des identifiants RNTI ouverts sélectionnés par la station de base BS1, auprès des terminaux attachés à la cellule C2, par exemple dans un message de signalisation. Ce message de signalisation est par exemple un message d'informations système émis par la station de base BS2 sur un canal physique partagé PDSCH.

Il convient de noter que dans l'exemple envisagé ici, on se limite à l'annulation de l'interférence intercellulaire de sorte que les identifiants RNTI ouverts ne sont signalés par la station de base BS1 qu'auprès des stations de base des cellules voisines. Lorsqu'on envisage également l'annulation de l'interférence de type MU-MIMO générée au sein de la cellule C1, la station de base BS1 publie également les identifiants RNTI ouverts sélectionnés auprès des terminaux mobiles de sa cellule C1, par exemple via l'envoi d'un message de signalisation RRC.

Comme décrit précédemment, conformément au standard LTE, la station de base BS1 alloue également un identifiant temporaire RNTI dédié à chaque terminal attaché à sa cellule C1, permettant d'identifier de façon unique ce terminal sur la cellule C1 (étape E30). Ainsi, dans l'exemple envisagé ici, elle alloue l'identifiant temporaire dédié RNTI1 au terminal T1. Cet identifiant RNTI1 est, contrairement aux identifiants RNTI ouverts sélectionnés à l'étape E10, réservé au terminal T1. Il est choisi parmi les identifiants RNTI disponibles pour la cellule qui n'ont pas été sélectionnés comme identifiants RNTI ouverts au cours de l'étape E10.

Cet identifiant dédié RNTI1 est envoyé par la station de base BS1 au terminal T1 dans un message de signalisation RRC dédié (message de configuration), de façon connue de l'homme du métier, et est reçu par celui-ci (étape F10 de la figure 5).

Dès lors :
- la station de base BS1 peut envoyer au terminal T1 des canaux physiques PDCCH codés à l'aide de cet identifiant RNTI1, notamment pour lui signaler les paramètres et les ressources de transmission qu'elle lui a alloués (incluant notamment le schéma de modulation et de codage, les blocs de ressources physiques PRB, la séquences pilote dédiée DMRS alloués), et
- le terminal T1 surveille l'espace de recherche défini par cet identifiant RNTI1, et peut décoder valablement les canaux physiques PDCCH qui lui sont destinés et sont (en)codés à l'aide de cet identifiant RNTI1 et utiliser les ressources de transmission allouées dans ces canaux PDCCH pour communiquer sur le réseau NW.

Le codage et le décodage des canaux physiques PDCCH à l'aide d'un identifiant RNTI ainsi que l'allocation des paramètres et des ressources de transmission par la station de base BS1 au terminal T1 pour un réseau LTE sont décrits plus en détail dans le document TS 36.212 intitulé « Evolved Universal Terrestrial Radio Access (E-UTRA); Multiplexing and channel coding », v11.1.0, Release 11, décembre 2012 et le document TS 36.213 cité précédemment et ne seront pas décrits davantage ici.

On suppose maintenant que la station de base BS1 détermine que le terminal T1 est susceptible de créer des interférences vers les cellules voisines (c'est-à-dire que les transmissions de la station de base BS1 à destination du terminal T1 sont susceptibles d'interférer les communications des terminaux des cellules voisines), et notamment vers les terminaux de la cellule BS2 (étape E40), par exemple parce que le terminal T1 demande un service consommateur de ressources radio pendant une durée assez longue (ex. service de diffusion d'un flux) et va donc occuper une large bande pendant un temps important. Autrement dit, elle détecte que le terminal T1 est un terminal interféreur au sens de l'invention.

En variante, d'autres critères peuvent être envisagés au niveau de la station de base BS1 pour détecter qu'un terminal est susceptible d'interférer les communications des terminaux des cellules voisines de la cellule C1 (ou même de la cellule C1), tels que par exemple le fait que le terminal soit en bordure de cellule, etc. De tels critères sont décrits notamment dans le document WO 2010/108136.

En variante, la station de base BS1 peut détecter qu'un terminal est susceptible d'interférer les communications des terminaux des cellules voisines de la cellule C1 grâce à un échange d'informations avec les stations de base contrôlant ces cellules voisines. Cette détection peut s'effectuer à chaque TTI lorsque par exemple les stations de base communiquent par une liaison de type fibre point-à-point. Par exemple, la station de base voisine BS2 peut alors informer la station de base BS1 de l'utilisation prévue de certaines ressources radio par le terminal T2 dans un TTI futur, de sorte que la station de base BS1 sait que si elle utilise ces ressources pour le terminal T1 lors de ce TTI futur, la transmission vers le terminal T1 est susceptible de créer de l'interférence intercellulaire pour le terminal T2.

Suite à cette détection, la station de base BS1 attribue au terminal T1 un identifiant RNTI ouvert, noté RNTIo1, choisi parmi les identifiants RNTI ouverts sélectionnés à l'étape E10, et diffusés auprès des stations de base des cellules voisines à la cellule C1 et des terminaux attachés aux autres cellules qu'elle contrôle (étape E50).

Cet identifiant RNTIo1 est attribué au terminal T1 en plus de son identifiant temporaire dédié RNTI1. Il est associé comme décrit précédemment à une représentation condensée, notée COD1 (par exemple COD1= « 001 »).

Pour signaler au terminal T1 que l'identifiant temporaire ouvert RNTIo1 lui a été attribué, la station de base BS1 émet, conformément à l'invention, dans un intervalle de temps de transmission ou TTI donné, un premier canal physique PDCCH, noté PDCCH1, codé avec l'identifiant temporaire dédié RNTI1 du terminal T1 (étape E60).

Ce premier canal PDCCH1 a avantageusement un format de DCI prédéterminé particulier, désigné par DCIo, qui traduit en soi le fait qu'un identifiant temporaire ouvert est attribué dans ce canal au terminal interféreur dont l'identifiant temporaire dédié a été utilisé pour coder ce canal.

Par exemple, dans ce format de DCI particulier DCIo, les N premiers bits de ce format DCIo du premier canal PDCCH1 sont fixés à « 1 », N étant un nombre entier prédéterminé choisi de sorte à éviter toute ambiguïté concernant l'interprétation de ce premier canal.

Le format DCIo du premier canal PDCCH1 comprend en outre un champ, appelé champ « Chp RNTIo », porté par exemple par les M bits suivant les N premiers bits à « 1 », dans lequel se trouve la représentation condensée de l'identifiant temporaire ouvert associé au terminal interféreur à qui le premier canal PDCCH1 est destiné.

Un exemple d'un tel format DCIo est illustré à la **figure 6A****,** pour le terminal interféreur T1.

Conformément à cet exemple, le format DCIo du canal PDCCH1 contient N premiers bits à « 1 » correspondant à une séquence prédéterminée Seq, suivis de M=3 bits correspondant à la représentation condensée COD1= « 001 » de l'identifiant temporaire ouvert RNTIo1 attribué au terminal T1 par la station de base BS1, cette représentation condensée étant contenue dans le champ « Chp RNTIo ».

Dans le mode de réalisation décrit ici, le format DCIo du premier canal PDCCH1 comprend le même nombre de bits qu'un format décrit dans le standard 3GPP LTE pour signaler les ressources allouées à un terminal dans un réseau LTE, de sorte à faciliter son décodage par le terminal interféreur T1. Par exemple, il comprend le même nombre de bits qu'un format 1A tel que défini dans le document TS 36.212.

Dans un autre mode de réalisation, le format de DCI du premier canal PDCCH1 comprend un nombre de bits inférieur à celui des formats DCI définis dans le document TS 36.212 du 3GPP.

Un exemple d'un tel format noté DCIo' est illustré à la **figure 6B****.** Il comprend un nombre réduit L de bits, choisi de sorte à être suffisant pour pouvoir inclure la représentation condensée des identifiants temporaires ouverts attribués aux terminaux interféreurs (en l'espèce L=3 suffit dans les exemples envisagés précédemment).

Le terminal T1, quant à lui, surveille de façon classique (i.e. telle que définie dans le standard 3GPP LTE), à chaque intervalle de temps de transmission (TTI), l'espace de recherche correspondant à son identifiant temporaire dédié RNTI1.

Ainsi, sur réception du canal de contrôle PDCCH1 sur l'espace de recherche correspondant à l'identifiant RNTI1 dédié, le terminal T1 décode le canal PDCCH1 à l'aide de cet identifiant RNTI1, de façon connue en soi (étape F20).

Puis il vérifie si le format de DCI du canal PDCCH1 ainsi décodé coïncide avec le format DCIo traduisant le fait qu'un identifiant temporaire ouvert est attribué au terminal T1 dans ce canal PDCCH1, et l'incitant à décoder un autre canal PDCCH à l'aide de cet identifiant temporaire ouvert dans ce même TTI (étape test F30).

Si le format de DCI du canal PDCCH1 ne coïncide pas avec le format DCIo (réponse non à l'étape test F30), mais avec un format de DCI défini dans le standard 3GPP LTE, cela signifie que le canal PDCCH1 n'est pas destiné à attribuer un identifiant temporaire ouvert au terminal T1, mais concerne des paramètres de transmission alloués à celui-ci (étape F40). Le terminal T1 utilise alors ces paramètres de transmission de façon connue en soi pour communiquer sur le réseau NW.

En revanche, si le terminal T1 détecte que le format de DCI du canal PDCCH1 coïncide avec le format prédéterminé DCIo (réponse oui à l'étape test F30), cela est interprété par le terminal T1 comme un ordre de décoder un autre canal PDCCH transmis dans le même TTI à l'aide de l'identifiant ouvert signalé dans le champ « Chp RNTIo » du canal PDCCH1, par l'intermédiaire de sa représentation condensée COD1.

Le terminal T1 extrait la représentation condensée COD1 du canal PDCCH1 décodé.

Puis il détermine à partir de cette représentation condensée l'identifiant temporaire ouvert RNTIO1 qui lui est attribué (étape F50).

A cette fin, dans le mode de réalisation décrit ici, il utilise la correspondance signalée par la station de base BS1 à l'étape E10.

Dans un autre mode de réalisation de l'invention, cette correspondance entre les identifiants ouverts et leurs représentations condensées, et *a fortiori* entre l'identifiant RNTIo1 et sa représentation condensée COD1, peut être signalée par la station de base BS1 au terminal T1 dans un message de signalisation RRC dédié.

Dans un autre mode de réalisation encore, cette correspondance entre les identifiants ouverts et leurs représentations condensées, et *a fortiori* entre l'identifiant RNTIo1 et sa représentation condensée COD1, peut être déduite par le terminal T1 d'un message de signalisation (tel que par exemple un message de signalisation émis sur un canal partagé PDSCH), contenant la liste des identifiants ouverts et émis par la station de base BS1 à destination des terminaux attachés à sa cellule (par exemple lorsque la représentation condensée d'un identifiant temporaire ouvert correspond à son rang dans la liste).

Dans le même intervalle de temps de transmission que le canal PDCCH1, la station de base BS1 émet un second canal physique de contrôle PDCCH2 allouant des paramètres et des ressources de transmission (notamment un ou plusieurs schémas de modulation et de codage MCS et des blocs PRB) au terminal interféreur T1. La façon dont ces ressources sont allouées à proprement parler au terminal T1 est connue en soi et conforme aux pratiques définies dans la norme 3GPP pour le réseau LTE.

Le format de DCI du second canal de contrôle PDCCH2 est l'un des formats définis dans la norme 3GPP, par exemple l'un quelconque des formats de DCI 2, 2A, 2B, 2C ou 2D définis dans le document 3GPP TS 36.212.

Conformément à l'invention, ce second canal PDCCH2 est codé à l'aide de l'identifiant temporaire ouvert RNTIo1 attribué au terminal T1 (étape E70 de la figure 4).

Il convient de noter que les canaux PDCCH associés aux identifiants RNTI ouverts, étant destinés à être décodés par des terminaux interférés (par exemple par le terminal T2) en mauvaises conditions radio du point de vue de la cellule C1 (puisqu'ils sont servis par une autre cellule C2), ont généralement besoin d'une forte protection. Ceci se traduit par l'utilisation d'un facteur d'agrégation élevé pour former ces canaux, c'est-à-dire qu'on forme préférentiellement chaque canal PDCCH destiné à un identifiant RNTI ouvert avec un nombre élevé d'éléments ou CCE (pour « Control Channel Element ») (dans un réseau LTE, selon le niveau de protection du PDCCH envisagé, un canal PDCCH peut généralement être formé de 1, 2, 4 ou 8 CCE). Le nombre de combinaisons de ressources candidates à tester lors de la recherche des canaux PDCCH par le terminal T2, qui dépend de ce facteur d'agrégation, sera ainsi relativement réduit. La complexité additionnelle liée à l'invention peut par conséquent être limitée.

On peut en outre délibérément réduire le nombre de formats de DCI éligibles à être transmis selon un identifiant RNTI ouvert, afin de limiter la complexité de la recherche des canaux PDCCH réalisée par les terminaux interférés. Un léger accroissement de la complexité de recherche peut toutefois être toléré pour les terminaux capables d'effectuer une réception MMSE-SIC, car ces derniers seront dotés d'une capacité de calcul supérieure. Afin que cet accroissement de complexité ne nuise cependant pas aux autres terminaux, on peut n'utiliser des identifiants RNTI ouverts que pour les terminaux capables de mettre en oeuvre une annulation d'interférences selon une technique MMSE-SIC.

Suite au décodage du canal PDCCH1, le terminal T1 surveille de façon classique (i.e. telle que définie dans le standard 3GPP), pour l'intervalle de temps de transmission en cours, l'espace de recherche correspondant à l'identifiant temporaire ouvert RNTIo1 attribué par la station de base BS1 dans le canal PDCCH1.

Ainsi, sur réception du canal contrôle PDCCH2 sur l'espace de recherche correspondant à l'identifiant ouvert RNTIo1, le terminal T1 décode le canal PDCCH2 à l'aide de l'identifiant ouvert RNTIo1, de façon connue en soi (étape F60 de la figure 5).

Il extrait ensuite les paramètres de transmission contenus dans ce canal, puis utilise dès lors, sur l'intervalle de temps de transmission en cours, les ressources désignées par ces paramètres de transmission lors de ses communications sur le réseau NW (étape F70).

On suppose que dans le même temps (i.e. dans le même TTI), la cellule C2 sert le terminal T2, apte à mettre en oeuvre un récepteur MMSE-SIC comme décrit précédemment.

Le terminal T2 a par ailleurs été informé par la station de base BS2 de la liste des identifiants ouverts (contenant notamment l'identifiant ouvert RNTIo1) sélectionnés par la station de base BS1 et destinés aux terminaux interféreurs de la cellule C1 susceptibles d'interférer les communications d'autres terminaux (dont notamment ceux de la cellule C2).

Le terminal T2 décode, à l'aide de son identifiant temporaire dédié RNTI2 (alloué par la station de base BS2 de façon connue en soi), les canaux PDCCH qui lui sont transmis dans ce TTI sur l'espace de recherche associé à cet identifiant. Le terminal T2, détectant que des données lui sont destinées dans ce TTI, tente de décoder les canaux PDCCH éventuellement transmis par la station de base BS1 sur les espaces de recherche correspondant aux identifiants ouverts dont il a été informé, et notamment sur l'espace de recherche correspondant à l'identifiant RNTIo1.

Le cas échéant (i.e. s'il détecte et décode un canal PDCCH associé à l'identifiant ouvert RNTIo1, tel que par exemple le canal PDCCH2), ce décodage permet avantageusement au terminal T2 d'identifier les paramètres de transmission alloués au terminal T1 sur ce TTI, et de déterminer si les ressources utilisées par le terminal T1 pour communiquer sur le réseau NW déduites de ces paramètres coïncident ou correspondent (en partie seulement ou totalement), avec les ressources qu'il utilise lui-même pour communiquer. Ce décodage permet au terminal T2 de déterminer si le terminal T1 est un interféreur et s'il doit tenter d'annuler l'interférence générée par T1 à l'aide de son récepteur MMSE-SIC, en prenant en compte les paramètres de transmission alloués au terminal T1 pour ce même TTI.

Le cas échéant, le terminal T2 peut alors, grâce à la connaissance de ces paramètres de transmission, décoder le signal interférent du terminal T1 avec succès puis annuler l'interférence correspondante ce qui permet d'améliorer la qualité de son lien radio pour la détection du signal utile qui lui est destiné.

Autrement dit, l'invention facilite l'application de techniques d'annulation d'interférence dans le cas où une interférence intercellulaire existe entre deux terminaux, et ce, moyennant une complexité en termes de signalisation raisonnable.

Il convient de noter que le format de DCI du canal PDCCH1 est sans impact sur le terminal T2 puisque ce canal est codé à l'aide de l'identifiant dédié RNTI1 du terminal T1 et non à l'aide de l'identifiant ouvert RNTIo1.

Par ailleurs, afin d'améliorer les performances du système 1 et de l'annulation d'interférence, on peut mettre en oeuvre une coordination préalable entre les stations de base BS1 et BS2 afin de s'assurer que le schéma de codage et de modulation du terminal T1 soit décodable par le terminal T2 (lors de l'application de la méthode d'annulation d'interférence), et que le débit offert au terminal T2 tient compte des performances améliorées du terminal T2 du fait de l'annulation de l'interférence via la connaissance des paramètres de transmission alloués à T1 aisément permise par l'invention. Le terminal T2 peut ainsi recevoir un meilleur débit instantané sur ce TTI que s'il n'avait pu mettre en oeuvre qu'un récepteur linéaire.

On note que tous les terminaux de la cellule C1 ne consomment pas forcément suffisamment de ressources pour générer des interférences dommageables aux communications du terminal T2, et donc qu'il est pertinent d'annuler. En effet, si le terminal T2 est servi sur un nombre élevé de blocs de ressources PRB (par exemple 25) mais n'est interféré que par la transmission d'un bloc de ressources PRB de la cellule C1 vers le terminal T1, cette interférence est peu dommageable et ne mérite pas nécessairement d'appliquer un récepteur MMSE-SIC pour la réduire. Les terminaux qui n'ont pas besoin de recevoir un canal PDCCH décodable par d'autres terminaux peuvent être servis en permanence sur leur identifiant RNTI dédié. Ces terminaux peuvent être avantageusement configurés pour ne pas avoir à rechercher leur canal PDCCH selon un format prédéfini indiquant un identifiant temporaire de réseau ouvert, ce qui permet d'économiser leur consommation de batterie.

Comme mentionné précédemment, l'exemple illustré en référence aux figures 1-6 concerne l'annulation d'interférences intercellulaires entre deux terminaux T1 et T2 servis par des stations de base BS1 et BS2 contrôlant des cellules voisines distinctes C1 et C2. Toutefois, l'invention s'applique également dans un contexte où l'on cherche à annuler une interférence de type MU-MIMO générée au sein d'une même cellule (par exemple par les communications du terminal T1 sur les communications du terminal T1'). Des étapes similaires à celles décrites précédemment pour l'annulation d'interférence intercellulaire peuvent alors être mises en oeuvre, moyennant la publication de la liste des identifiants RNTI ouverts auprès des terminaux attachés à la cellule C1 (comme par exemple auprès du terminal T1').

De même, l'invention s'applique également dans un contexte où à la fois une interférence intercellulaire et une interférence MU-MIMO doivent être annulées.

## Revendications

1. Procédé de signalisation, destiné à être mis en oeuvre par une station de base (BS1) d'un réseau de télécommunications cellulaire (NW), cette station de base contrôlant au moins une cellule (C1) du réseau à laquelle est attaché au moins un terminal (T1,T1') identifié de façon unique sur cette cellule par un identifiant temporaire de réseau dit dédié (RNTI1, RNTI1'), le procédé de signalisation comprenant :
- une étape d'attribution (E30) d'un identifiant temporaire de réseau dit ouvert (RNTIo1), à un terminal dit interféreur (T1) identifié par la station de base parmi ledit au moins un terminal attaché à la cellule comme étant susceptible d'interférer au moins une communication établie par un autre terminal (T1',T2) attaché à cette cellule (C1) ou à une cellule voisine de cette cellule (C2) ; ledit procédé **caractérisé par**:
- une étape de publication (E20) de cet identifiant temporaire de réseau ouvert (RNTIo1)
- une étape d'envoi (E60) d'un premier canal physique de contrôle (PDCCH1) selon un format prédéterminé (DCIo,DCIo') au terminal interféreur (T1) comprenant une représentation condensée (COD1) de l'identifiant temporaire de réseau ouvert (RNTIo1) attribué au terminal interféreur, ce premier canal physique étant codé à l'aide de l'identifiant temporaire de réseau dédié (RNTI1) du terminal interféreur ; et
- une étape d'envoi (E70) d'un second canal physique de contrôle (PDCCH2) au terminal interféreur (T1) lui allouant des ressources de transmission sur le réseau cellulaire (NW), ce second canal étant codé à l'aide de l'identifiant temporaire de réseau ouvert (RNTIo1).

2. Procédé de signalisation selon la revendication 1 dans lequel l'étape de publication (E20) de l'identifiant temporaire de réseau ouvert (RNITo1) comprend la diffusion de cet identifiant auprès de terminaux (T1,T1') attachés à ladite cellule (C1) et/ou auprès de terminaux (T2) attachés à au moins une autre cellule contrôlée par la station de base (BS1) et voisine de ladite cellule (C1).

3. Procédé de signalisation selon la revendication 1 ou 2 dans lequel l'étape de publication de l'identifiant temporaire de réseau ouvert (RNITo1) comprend la diffusion de cet identifiant auprès d'au moins une autre station de base (BS2) contrôlant une cellule voisine (C2) de la cellule (C1).

4. Procédé de signalisation selon l'une quelconque des revendications 1 à 3 comprenant en outre une étape de diffusion d'un message sur ladite cellule (C1) comprenant une correspondance entre l'identifiant temporaire de réseau ouvert (RNTIo1) et sa représentation condensée (COD1).

5. Procédé de signalisation selon l'une quelconque des revendications 1 à 4 comprenant en outre une étape d'envoi d'un message de signalisation dédié au terminal interféreur géré par une couche de gestion de ressources radio, ce message de signalisation dédié comprenant une correspondance entre l'identifiant temporaire de réseau ouvert (RNTIo1) et sa représentation condensée (COD1).

6. Procédé de signalisation selon l'une quelconque des revendications 1 à 5 dans lequel le format (DCIo) du premier canal physique de contrôle (PDCCH1) comprend un champ contenant une séquence (Seq) de bits prédéterminée.

7. Procédé de signalisation selon l'une quelconque des revendications 1 à 5 dans lequel le format (DCIo') du premier canal physique de contrôle (PDCCH1) comprend un nombre de bits inférieur à un format du second canal physique de contrôle (PDCCH2).

8. Procédé de signalisation selon l'une quelconque des revendications 1 à 7 dans lequel le réseau de télécommunications cellulaire (NW) est un réseau LTE (Long Term Evolution) et :
- l'identifiant temporaire de réseau ouvert (RNTIo1) et l'identifiant temporaire de réseau dédié (RNTI1) attribués au terminal interféreur sont des identifiants de type RNTI (Radio Network Temporary Identifier) ; et
- le premier et le second canal physique de contrôle sont des canaux PDCCH (Physical Downlink Control CHannel).

9. Procédé de signalisation selon la revendication 5 dans lequel le message de signalisation dédié est un message de signalisation RRC (Radio Resource Control).

10. Programme d'ordinateur comportant des instructions pour l'exécution des étapes du procédé de signalisation selon l'une quelconque des revendications 1 à 9 lorsque ledit programme est exécuté par un ordinateur.

11. Support d'enregistrement lisible par un ordinateur sur lequel est enregistré un programme d'ordinateur comprenant des instructions pour l'exécution des étapes du procédé de signalisation selon l'une quelconque des revendications 1 à 9.

12. Station de base (BS1) d'un réseau de télécommunications cellulaire (NW), contrôlant au moins une cellule du réseau (C1) à laquelle est attaché au moins un terminal (T1,T1') identifié de façon unique sur cette cellule par un identifiant temporaire de réseau dit dédié (RNTI1,RNTI1'), cette station de base comprenant :
- un module d'attribution d'un identifiant temporaire de réseau dit ouvert (RNTIo1) à un terminal dit interféreur (T1) identifié parmi ledit au moins un terminal attaché à la cellule comme étant susceptible d'interférer au moins une communication établie par un autre terminal attaché à cette cellule ou à une cellule voisine ; ladite station de base **caractérisée par**:
- un module de publication de cet identifiant temporaire de réseau ouvert ;
- un module d'envoi d'un premier canal physique de contrôle (PDCCH1) selon un format prédéterminé au terminal interféreur comprenant une représentation condensée (COD1) de cet identifiant temporaire ouvert (RNTIo1), ce module d'envoi étant apte à coder ledit premier canal physique à l'aide de l'identifiant temporaire de réseau dédié (RNTI1) du terminal interféreur ; et
- un module d'envoi d'un second canal physique de contrôle (PDCCH2) au terminal interféreur lui allouant des ressources de transmission sur le réseau cellulaire (NW), ce module d'envoi étant apte à coder ledit second canal physique à l'aide de l'identifiant temporaire de réseau ouvert (RNTIo1) attribué au terminal interféreur.

13. Procédé de communication, destiné à être mis en oeuvre par un terminal interféreur (T1) attaché à une cellule (C1) d'un réseau de télécommunications cellulaire (NW) et identifié de manière unique dans cette cellule par un identifiant temporaire de réseau dit dédié (RNTI1), ladite cellule étant contrôlée par une station de base (BS1), et le terminal interféreur étant susceptible d'interférer au moins une communication établie par un autre terminal (T1',T2) de ladite cellule ou d'une cellule voisine à cette cellule, le procédé de communication **caractérise en ce qu'**il comprend :
- une étape (F20) de décodage d'un premier canal physique de contrôle (PDCCH1) à l'aide de l'identifiant temporaire de réseau dédié (RNTI1), ce premier canal physique de contrôle ayant un format prédéterminé (DCIo,DCIo') et comprenant une représentation condensée (COD1) d'un identifiant temporaire de réseau dit ouvert (RNTIo1) attribué au terminal interféreur par la station de base, et publié ou destiné à être publié par celle-ci ;
- sur détection (F30) du format prédéterminé du premier canal physique de contrôle :
o une étape de détermination (F50) de l'identifiant temporaire de réseau ouvert (RNTIo1) attribué au terminal interféreur à partir de ladite représentation condensée (COD1) contenue dans le premier canal physique ; et
o une étape de décodage (F60) d'un second canal physique de contrôle (PDCCH2) à l'aide de l'identifiant temporaire de réseau ouvert ainsi déterminé, ce second canal physique de contrôle allouant des ressources de transmission sur le réseau cellulaire au terminal interféreur ;
- une étape d'utilisation (F70) des ressources de transmission allouées dans ce second canal pour communiquer sur le réseau cellulaire.

14. Terminal (T1) attaché à une cellule (C1) d'un réseau de télécommunications cellulaire (NW) et identifié de manière unique sur cette cellule par un identifiant temporaire de réseau dit dédié (RNTI1), ladite cellule étant contrôlée par une station de base (BS1) et ledit terminal dit interféreur étant susceptible d'interférer au moins une communication établie par un autre terminal attaché à ladite cellule et/ou à une cellule voisine à ladite cellule, ledit terminal **caractérisé en ce qu'**il comprend :
- un module de décodage d'un premier canal physique de contrôle (PDCCH1) à l'aide de l'identifiant temporaire de réseau dédié (RNTI1), ce premier canal physique de contrôle ayant un format prédéterminé et comprenant une représentation condensée (COD1) d'un identifiant temporaire de réseau dit ouvert (RNTIo1) attribué au terminal interféreur par la station de base (BS1), et publié ou destiné à être publié par celle-ci ;
- un module, activé sur détection du format prédéterminé du premier canal physique de contrôle, de détermination de l'identifiant temporaire de réseau ouvert (RNTIo1) à partir de la représentation condensée (COD1) contenue dans le premier canal physique de contrôle ;
- un module, activé sur détection du format prédéterminé du premier canal physique de contrôle, de décodage d'un second canal physique de contrôle (PDCCH2) à l'aide de l'identifiant temporaire de réseau ouvert (RNTIo1) déterminé par le module de détermination, ce second canal physique de contrôle allouant des ressources de transmission sur le réseau cellulaire au terminal interféreur ; et
- un module d'utilisation des ressources de transmission allouées dans ce second canal pour communiquer sur le réseau cellulaire.

15. Système (1) d'un réseau de télécommunications cellulaire (NW) comprenant :
- une station de base (BS1) selon la revendication 12 contrôlant au moins une cellule (C1) du réseau de télécommunications cellulaire ;
- un terminal interféreur (T1) selon la revendication 14 attaché à ladite cellule ; et
- un terminal interféré (T1',T2) par ledit terminal interféreur, ledit terminal interféré étant attaché à la cellule du terminal interféreur ou à une cellule du réseau voisine, et apte à mettre en oeuvre une technique d'annulation d'interférence à l'aide de l'identifiant temporaire de réseau ouvert (RNTIo1) alloué au terminal interféreur et publié par la station de base.

## Patentansprüche

1. Verfahren zur Signalisierung, das dazu bestimmt ist, von einer Basisstation (BS1) eines zellularen Telekommunikationsnetzes (NW) durchgeführt zu werden, wobei diese Basisstation wenigstens eine Zelle (C1) des Netzes steuert, mit welcher wenigstens ein Endgerät (T1, T1') verbunden ist, das in dieser Zelle durch eine sogenannte "dedizierte" temporäre Netzkennung (RNTI1, RNTI1') auf eindeutige Weise identifiziert ist, wobei das Verfahren zur Signalisierung umfasst:
- einen Schritt der Zuweisung (E30) einer sogenannten "offenen" temporären Netzkennung (RNTIo1) zu einem sogenannten "störenden" Endgerät (T1), das von der Basisstation unter dem wenigstens einen mit der Zelle verbundenen Endgerät als fähig identifiziert wurde, wenigstens eine Verbindung zu stören, die von einem anderen Endgerät (T1', T2) hergestellt wurde, das mit dieser Zelle (C1) oder mit einer dieser Zelle benachbarten Zelle (C2) verbunden ist;
wobei das Verfahren **gekennzeichnet ist durch**:
- einen Schritt der Veröffentlichung (E20) dieser offenen temporären Netzkennung (RNTIo1) ;
- einen Schritt des Sendens (E60) eines ersten physischen Steuerkanals (PDCCH1) gemäß einem vorbestimmten Format (DCIo, DCIo') an das störende Endgerät (T1), der eine verdichtete Darstellung (COD1) der offenen temporären Netzkennung (RNTIo1) umfasst, die dem störenden Endgerät zugewiesen wurde, wobei dieser erste physische Kanal mithilfe der dedizierten temporären Netzkennung (RNTI1) des störenden Endgeräts codiert ist; und
- einen Schritt des Sendens (E70) eines zweiten physischen Steuerkanals (PDCCH2) an das störende Endgerät (T1), der ihm Übertragungsressourcen in dem zellularen Netz (NW) zuteilt, wobei dieser zweite Kanal mithilfe der offenen temporären Netzkennung (RNTIo1) codiert ist.

2. Verfahren zur Signalisierung nach Anspruch 1, wobei der Schritt der Veröffentlichung (E20) der offenen temporären Netzkennung (RNTIo1) das Senden dieser Kennung an Endgeräte (T1, T1'), die mit der Zelle (C1) verbunden sind, und/oder an Endgeräte (T2), die mit wenigstens einer weiteren Zelle verbunden sind, die von der Basisstation (BS1) gesteuert wird und der Zelle (C1) benachbart ist, umfasst.

3. Verfahren zur Signalisierung nach Anspruch 1 oder 2, wobei der Schritt der Veröffentlichung der offenen temporären Netzkennung (RNTIo1) das Senden dieser Kennung an wenigstens eine weitere Basisstation (B2) umfasst, welche eine benachbarte Zelle (C2) der Celle (C1) steuert.

4. Verfahren zur Signalisierung nach einem der Ansprüche 1 bis 3, welches außerdem einen Schritt des Rundsendens einer Nachricht in dieser Zelle (C1) umfasst, die eine Entsprechung zwischen der offenen temporären Netzkennung (RNTIo1) und ihrer verdichteten Darstellung (COD1) umfasst.

5. Verfahren zur Signalisierung nach einem der Ansprüche 1 bis 4, welches außerdem einen Schritt des Sendens einer dedizierten Signalisierungsnachricht an das störende Endgerät umfasst, die von einer Funkressourcensteuerungsschicht verwaltet wird, wobei diese dedizierte Signalisierungsnachricht eine Entsprechung zwischen der offenen temporären Netzkennung (RNTIo1) und ihrer verdichteten Darstellung (COD1) umfasst.

6. Verfahren zur Signalisierung nach einem der Ansprüche 1 bis 5, wobei das Format (DCIo) des ersten physischen Steuerkanals (PDCCH1) ein Feld umfasst, das eine vorbestimmte Folge (Seq) von Bits enthält.

7. Verfahren zur Signalisierung nach einem der Ansprüche 1 bis 5, wobei das Format (DCIo') des ersten physischen Steuerkanals (PDCCH1) eine kleinere Anzahl von Bits enthält als ein Format des zweiten physischen Steuerkanals (PDCCH2).

8. Verfahren zur Signalisierung nach einem der Ansprüche 1 bis 7, wobei das zellulare Telekommunikationsnetz (NW) ein LTE- (Long Term Evolution) Netz ist und:
- die offene temporäre Netzkennung (RNTIo1) und die dedizierte temporäre Netzkennung (RNTI1), die dem störenden Endgerät zugewiesen werden, Kennungen vom Typ RNTI (Radio Network Temporary Identifier) sind; und
- der erste und der zweite physische Steuerkanal PDCCH- (Physical Downlink Control Channel) Kanäle sind.

9. Verfahren zur Signalisierung nach Anspruch 5, wobei die dedizierte Signalisierungsnachricht eine RRC- (Radio Resource Control) Signalisierungsnachricht ist.

10. Computerprogramm, welches Anweisungen zur Ausführung der Schritte des Verfahrens zur Signalisierung nach einem der Ansprüche 1 bis 9, wenn das Programm von einem Computer ausgeführt wird, umfasst.

11. Computerlesbarer Datenträger, auf welchem ein Computerprogramm gespeichert ist, das Anweisungen zur Ausführung der Schritte des Verfahrens zur Signalisierung nach einem der Ansprüche 1 bis 9 umfasst.

12. Basisstation (BS1) eines zellularen Telekommunikationsnetzes (NW), welche wenigstens eine Zelle (C1) des Netzes steuert, mit welcher wenigstens ein Endgerät (T1, T1') verbunden ist, das in dieser Zelle durch eine sogenannte "dedizierte" temporäre Netzkennung (RNTI1, RNTI1') auf eindeutige Weise identifiziert ist, wobei diese Basisstation umfasst:
- ein Modul zur Zuweisung einer sogenannten "offenen" temporären Netzkennung (RNTIo1) zu einem sogenannten "störenden" Endgerät (T1), das unter dem wenigstens einen mit der Zelle verbundenen Endgerät als fähig identifiziert wurde, wenigstens eine Verbindung zu stören, die von einem anderen Endgerät hergestellt wurde, das mit dieser Zelle oder mit einer benachbarten Zelle verbunden ist;
wobei die Basisstation **gekennzeichnet ist durch**:
- ein Modul zur Veröffentlichung dieser offenen temporären Netzkennung;
- ein Modul zum Senden eines ersten physischen Steuerkanals (PDCCH1) gemäß einem vorbestimmten Format an das störende Endgerät, der eine verdichtete Darstellung (COD1) dieser offenen temporären Netzkennung (RNTIo1) umfasst, wobei dieses Sendemodul in der Lage ist, den ersten physischen Kanal mithilfe der dedizierten temporären Netzkennung (RNTI1) des störenden Endgeräts zu codieren; und
- ein Modul zum Senden eines zweiten physischen Steuerkanals (PDCCH2) an das störende Endgerät, der ihm Übertragungsressourcen in dem zellularen Netz (NW) zuteilt, wobei dieses Sendemodul in der Lage ist, den zweiten physischen Kanal mithilfe der dem störenden Endgerät zugewiesenen offenen temporären Netzkennung (RNTIo1) zu codieren.

13. Kommunikationsverfahren, das dazu bestimmt ist, von einem störenden Endgerät (T1) durchgeführt zu werden, das mit einer Zelle (C1) eines zellularen Telekommunikationsnetzes (NW) verbunden ist und in dieser Zelle durch eine sogenannte "dedizierte" temporäre Netzkennung (RNTI1) auf eindeutige Weise identifiziert ist, wobei die Zelle von einer Basisstation (BS1) gesteuert wird und das störende Endgerät in der Lage ist, wenigstens eine Verbindung zu stören, die von einem anderen Endgerät (T1', T2) der Zelle oder einer dieser Zelle benachbarten Zelle hergestellt wurde, wobei das Kommunikationsverfahren **dadurch gekennzeichnet ist, dass** es umfasst:
- einen Schritt (F20) der Decodierung eines ersten physischen Steuerkanals (PDCCH1) mithilfe der dedizierten temporären Netzkennung (RNTI1), wobei dieser erste physische Steuerkanal ein vorbestimmtes Format (DCIo, DCIo') aufweist und eine verdichtete Darstellung (COD1) einer sogenannten "offenen" temporären Netzkennung (RNTIo1) umfasst, die dem störenden Endgerät von der Basisstation zugewiesen wurde und von dieser veröffentlicht wurde oder dazu bestimmt ist, von dieser veröffentlicht zu werden;
- nach Erkennung (F30) des vorbestimmten Formats des ersten physischen Steuerkanals;
∘ einen Schritt der Bestimmung (F50) der offenen temporären Netzkennung (RNTIo1), die dem störenden Endgerät zugewiesen wurde, ausgehend von der verdichteten Darstellung (COD1), die in dem ersten physischen Kanal enthalten ist; und
∘ einen Schritt der Decodierung (F60) eines zweiten physischen Steuerkanals (PDCCH2) mithilfe der so bestimmten offenen temporären Netzkennung, wobei dieser zweite physische Steuerkanal dem störenden Endgerät Übertragungsressourcen in dem zellularen Netz zuteilt;
- einen Schritt der Verwendung (F70) der in diesem zweiten Kanal zugeteilten Übertragungsressourcen, um in dem zellularen Netz zu kommunizieren.

14. Endgerät (T1), das mit einer Zelle (C1) eines zellularen Telekommunikationsnetzes (NW) verbunden ist und in dieser Zelle durch eine sogenannte "dedizierte" temporäre Netzkennung (RNTI1) auf eindeutige Weise identifiziert ist, wobei die Zelle von einer Basisstation (BS1) gesteuert wird und das sogenannte "störende" Endgerät in der Lage ist, wenigstens eine Verbindung zu stören, die von einem anderen Endgerät hergestellt wurde, das mit dieser Zelle und/oder oder mit einer dieser Zelle benachbarten Zelle verbunden ist, wobei das Endgerät **dadurch gekennzeichnet ist, dass** es umfasst:
- ein Modul zur Decodierung eines ersten physischen Steuerkanals (PDCCH1) mithilfe der dedizierten temporären Netzkennung (RNTI1), wobei dieser erste physische Steuerkanal ein vorbestimmtes Format aufweist und eine verdichtete Darstellung (COD1) einer sogenannten "offenen" temporären Netzkennung (RNTIo1) umfasst, die dem störenden Endgerät von der Basisstation (BS1) zugewiesen wurde und von dieser veröffentlicht wurde oder dazu bestimmt ist, von dieser veröffentlicht zu werden;
- ein nach Erkennung des vorbestimmten Formats des ersten physischen Steuerkanals aktiviertes Modul zur Bestimmung der offenen temporären Netzkennung (RNTIo1) ausgehend von der verdichteten Darstellung (COD1), die in dem ersten physischen Steuerkanal enthalten ist;
- ein nach Erkennung des vorbestimmten Formats des ersten physischen Steuerkanals aktiviertes Modul zur Decodierung eines zweiten physischen Steuerkanals (PDCCH2) mithilfe der von dem Bestimmungsmodul bestimmten offenen temporären Netzkennung (RNTIo1), wobei dieser zweite physische Steuerkanal dem störenden Endgerät Übertragungsressourcen in dem zellularen Netz zuteilt; und
- ein Modul zur Verwendung der in diesem zweiten Kanal zugeteilten Übertragungsressourcen, um in dem zellularen Netz zu kommunizieren.

15. System (1) eines zellularen Telekommunikationsnetzes (NW), umfassend:
- eine Basisstation (BS1) nach Anspruch 12, die wenigstens eine Zelle (C1) des zellularen Telekommunikationsnetzes steuert;
- ein störendes Endgerät (T1) nach Anspruch 14, das mit der Zelle verbunden ist; und
- ein von dem störenden Endgerät gestörtes Endgerät (T1', T2), wobei das gestörte Endgerät mit der Zelle des störenden Endgeräts oder mit einer benachbarten Zelle des Netzes verbunden ist und in der Lage ist, ein Verfahren zur Störungsbeseitigung mithilfe der offenen temporären Netzkennung (RNTIo1) durchzuführen, die dem störenden Endgerät von der Basisstation zugeteilt und von dieser veröffentlicht wurde.

## Claims

1. Signalling method, intended to be implemented by a base station (BS1) of a cellular telecommunications network (NW), this base station controlling at least one cell (C1) of the network to which is attached at least one terminal (T1, T1') identified uniquely on this cell by a so-called dedicated network temporary identifier (RNTI1, RNTI1'), the signalling method comprising:
- a step of assignment (E30) of a so-called open network temporary identifier (RNTIo1) to a so-called interfering terminal (T1) identified by the base station out of said at least one terminal attached to the cell as being likely to interfere with at least one call set up by another terminal (T1', T2) attached to this cell (C1) or to a cell neighbouring this cell (C2);
said method **characterized by**:
- a step of publication (E20) of this open network temporary identifier (RNTIo1);
- a step of sending (E60) a first physical control channel (PDCCH1) according to a predetermined format (DCIo, DCIo') to the interfering terminal (T1) comprising a condensed representation (COD1) of the open network temporary identifier (RNTIo1) assigned to the interfering terminal, this first physical channel being coded using the dedicated network temporary identifier (RNTI1) of the interfering terminal; and
- a step of sending (E70) a second physical control channel (PDCCH2) to the interfering terminal (T1) allocating thereto transmission resources on the cellular network (NW), this second channel being coded using the open network temporary identifier (RNTIo1).

2. Signalling method according to Claim 1, in which the step of publication (E20) of the open network temporary identifier (RNITo1) comprises the broadcasting of this identifier to terminals (T1, T1') attached to said cell (C1) and/or to terminals (T2) attached to at least one other cell controlled by the base station (BS1) and neighbouring said cell (C1).

3. Signalling method according to Claim 1 or 2, in which the step of publication of the open network temporary identifier (RNITo1) comprises the broadcasting of this identifier to at least one other base station (BS2) controlling a cell (C2) neighbouring the cell (C1).

4. Signalling method according to any one of Claims 1 to 3, further comprising a step of broadcasting a message on said cell (C1) comprising a mapping between the open network temporary identifier (RNTIo1) and its condensed representation (COD1).

5. Signalling method according to any one of Claims 1 to 4, further comprising a step of sending a dedicated signalling message to the interfering terminal managed by a radio resource management layer, this dedicated signalling message comprising a mapping between the open network temporary identifier (RNTIo1) and its condensed representation (COD1).

6. Signalling method according to any one of Claims 1 to 5, in which the format (DCIo) of the first physical control channel (PDCCH1) comprises a field containing a predetermined sequence (Seq) of bits.

7. Signalling method according to any one of Claims 1 to 5, in which the format (DCIo') of the first physical control channel (PDCCH1) comprises a number of bits lower than a format of the second physical control channel (PDCCH2).

8. Signalling method according to any one of Claims 1 to 7, in which the cellular telecommunications network (NW) is an LTE (Long Term Evolution) network and:
- the open network temporary identifier (RNTIo1) and the dedicated network temporary identifier (RNTI1) assigned to the interfering terminal are identifiers of RNTI (Radio Network Temporary Identifier) type; and
- the first and the second physical control channels are PDCCH (Physical Downlink Control CHannel) channels.

9. Signalling method according to Claim 5, in which the dedicated signalling message is an RRC (Radio Resource Control) signalling message.

10. Computer program comprising instructions for the execution of the steps of the signalling method according to any one of Claims 1 to 9 when said program is run by a computer.

11. Computer-readable storage medium on which is stored a computer program comprising instructions for the execution of the steps of the signalling method according to any one of Claims 1 to 9.

12. Base station (BS1) of a cellular telecommunications network (NW), controlling at least one cell of the network (C1) to which is attached at least one terminal (T1, T1') identified uniquely on this cell by a so-called dedicated network temporary identifier (RNTIo1, RNTI1'), this base station comprising:
- a module for assigning a so-called open network temporary identifier (RNTIo1) to a so-called interfering terminal (T1) identified out of said at least one terminal attached to the cell as being likely to interfere with at least one call set up by another terminal attached to this cell or to a neighbouring cell;
said base station **characterized by**:
- a module for publishing this open network temporary identifier;
- a module for sending a first physical control channel (PDCCH1) according to a predetermined format to the interfering terminal comprising a condensed representation (COD1) of this open temporary identifier (RNTIo1), this sending module being able to code said first physical channel using the dedicated network temporary identifier (RNTI1) of the interfering terminal; and
- a module for sending a second physical control channel (PDCCH2) to the interfering terminal allocating thereto transmission resources on the cellular network (NW), this sending module being able to code said second physical channel using the open network temporary identifier (RNTIo1) assigned to the interfering terminal.

13. Communication method, intended to be implemented by an interfering terminal (T1) attached to a cell (C1) of a cellular telecommunications network (NW) and identified uniquely in this cell by a so-called dedicated network temporary identifier (RNTI1), said cell being controlled by a base station (BS1), and the interfering terminal being likely to interfere with at least one call set up by another terminal (T1', T2) of said cell or of a cell neighbouring to this cell, the communication method **characterized in that** it comprises:
- a step (F20) of decoding a first physical control channel (PDCCH1) using the dedicated network temporary identifier (RNTI1), this first physical control channel having a predetermined format (DCIo, DCIo') and comprising a condensed representation (COD1) of a so-called open network temporary identifier (RNTIo1) assigned to the interfering terminal by the base station, and published or intended to be published thereby;
- on detection (F30) of the predetermined format of the first physical control channel:
∘ a step of determination (F50) of the open network temporary identifier (RNTIo1) assigned to the interfering terminal from said condensed representation (COD1) contained in the first physical channel; and
∘ a step of decoding (F60) a second physical control channel (PDCCH2) using the duly determined open network temporary identifier, this second physical control channel allocating transmission resources on the cellular network to the interfering terminal;
- a step of use (F70) of the transmission resources allocated in this second channel to communicate over the cellular network.

14. Terminal (T1) attached to a cell (C1) of a cellular telecommunications network (NW) and identified uniquely on this cell by a so-called dedicated network temporary identifier (RNTI1), said cell being controlled by a base station (BS1) and said so-called interfering terminal being likely to interfere with at least one call set up by another terminal attached to said cell and/or to a cell neighbouring said cell, said terminal **characterized in that** it comprises:
- a module for decoding a first physical control channel (PDCCH1) using the dedicated network temporary identifier (RNTI1), this first physical control channel having a predetermined format and comprising a condensed representation (COD1) of a so-called open network temporary identifier (RNTIo1) assigned to the interfering terminal by the base station (BS1), and published or intended to be published thereby;
- a module, activated on detection of the predetermined format of the first physical control channel, for determining the open network temporary identifier (RNTIo1) from the condensed representation (COD1) contained in the first physical control channel;
- a module, activated on detection of the predetermined format of the first physical control channel, for decoding a second physical control channel (PDCCH2) using the open network temporary identifier (RNTIo1) determined by the determination module, this second physical control channel allocating transmission resources on the cellular network to the interfering terminal; and
- a module for using the transmission resources allocated in this second channel to communicate over the cellular network.

15. System (1) of a cellular telecommunications network (NW) comprising:
- a base station (BS1) according to Claim 12 controlling at least one cell (C1) of the cellular telecommunications network;
- an interfering terminal (T1) according to Claim 14 attached to said cell; and
- a terminal (T1', T2) interfered with by said interfering terminal, said terminal interfered with being attached to the cell of the interfering terminal or to a neighbouring network cell, and able to implement an interference cancelling technique using the open network temporary identifier (RNTIo1) allocated to the interfering terminal and published by the base station.
